# EUROPEAN PATENT APPLICATION

(11) **EP 4 676 117 A1**
(43) Date of publication of application: **07.01.2026**
(21) Application number: 23931791.0
(22) Date of filing: 17.11.2023
(51) Int. Cl.: H04W 28/04, H04W 76/27, H04L 1/00

(54) **METHOD FOR USE IN CALL, DEVICE, CHIP SYSTEM, AND STORAGE MEDIUM**

(30) Priority: 05.04.2023 CN 202310392810; 28.04.2023 CN 202310491058
(71) Applicant: Honor Device Co., Ltd., Shenzhen, Guangdong 518040 (CN)
(72) Inventor: LI, Haibo, Shenzhen, Guangdong 518040 (CN)
(74) Representative: MERH-IP Matias Erny Reichl Hoffmann Patentanwälte PartG mbB
(86) International application number: PCT/CN2023/132198
(87) International publication number: WO 2024/207745

(57) **Abstract**

This application provides a method for a call, a device, a chip system, and a storage medium. The method is applied to a terminal device. Verification is performed on first information in a first RRC reconfiguration message currently received from a first cell, a first parameter in a locally stored first configuration item, and a value corresponding to the first parameter, and when a value corresponding to the first parameter is abnormal, an abnormal value corresponding to the first parameter is ignored, so that the first RRC reconfiguration message is successfully verified, thereby ensuring that the terminal device can complete RRC reconfiguration and reducing a probability of an RRC reconfiguration failure.

## Description

This application claims priority to Chinese Patent Application No. 202310392810.5, filed with the China National Intellectual Property Administration on April 05, 2023 and entitled "METHOD FOR CALL AND DEVICE", and to Chinese Patent Application No. 202310491058.X, filed with the China National Intellectual Property Administration on April 28, 2023 and entitled "METHOD FOR CALL, DEVICE, CHIP SYSTEM, AND STORAGE MEDIUM, which are incorporated herein by reference in their entireties.

### TECHNICAL FIELD

This application relates to the field of communication technologies, and in particular, to a method for a call, a device, a chip system, and a storage medium.

### BACKGROUND

In 5G, that is, an NR (New Radio, New Radio) network, RRC reconfiguration (Radio Resource Control Reconfiguration, radio resource control reconfiguration) initiated by a network side (which refers to a 5G base station, such as a gNB (gNodeB, the next Generation Node B)) to a terminal device (also referred to as a UE) is intended to modify an RRC connection established between the UE and the network side, so as to better adapt to an actual service scenario.

However, currently, there is a case in which the UE fails to verify an RRC reconfiguration message, thereby causing a call interruption.

### SUMMARY

To resolve the foregoing technical problem, this application provides a method for a call, a device, a chip system, and a storage medium, so as to reduce a call fault and improve user experience.

According to a first aspect, this application provides a method for a call. The method is applied to a terminal device and includes: in a process of performing a call in a first cell, receiving a first RRC reconfiguration message sent by a base station corresponding to the first cell, where before receiving the first RRC reconfiguration message, the terminal device stores a first configuration item, and the first configuration item includes a first parameter and a first value corresponding to the first parameter; verifying the first RRC reconfiguration message and the first configuration item, where the first RRC reconfiguration message includes first information, and the verifying the first RRC reconfiguration message and the first configuration item includes verifying the first information, the first parameter, and the first value corresponding to the first parameter; and in a process of verifying the first RRC reconfiguration message and the first configuration item, ignoring an abnormal value corresponding to the first parameter when a value corresponding to the first parameter is abnormal, so that the first RRC reconfiguration message is successfully verified, where the value corresponding to the first parameter includes the first value.

The first cell is a cell on which the terminal device (UE) currently camps, for example, may be the Cell A, the Cell B, or the Cell C described below. Specifically, in this application, in the following, that the first cell is the Cell B is used as an example.

The RRC reconfiguration message is the following RRC Reconfiguration sent by a base station corresponding to the cell to the UE. Specifically, in this application, in a scenario in which the first cell is the Cell B, the first RRC reconfiguration message described herein is, for example, an RRC reconfiguration message 3 or an RRC reconfiguration message 4 described below.

The first configuration item is a configuration item locally stored in the terminal device, and may include the foregoing first parameter and a value corresponding to the first parameter. In this embodiment, that the value corresponding to the first parameter stored in the terminal device is the first value is used as an example. However, in actual application, the value corresponding to the first parameter is not limited to the first value, and may be the following second value, third value, or the like.

That the terminal device verifies the first message, the first parameter, and the first value corresponding to the first parameter may specifically mean verifying whether the first message matches or is compatible with the first parameter and the first value corresponding to the first parameter.

Therefore, when the value corresponding to the first parameter is abnormal, an abnormal value corresponding to the first parameter is ignored, so that the first RRC reconfiguration message is successfully verified, thereby ensuring that the terminal device can complete RRC reconfiguration and reducing a probability of RRC reconfiguration failure.

The ignoring an abnormal value corresponding to the first parameter may be not considering the abnormal value corresponding to the first parameter (which may be understood as ignoring a verification abnormality caused by the abnormal value corresponding to the first parameter when a verification result of the first RRC reconfiguration message is determined), or may be updating the value corresponding to the first parameter, so that the abnormal value corresponding to the first parameter is corrected or deleted or invalidated. Further, when the verification result of the first RRC reconfiguration message is determined, a verification failure of the first RRC reconfiguration message is not to be caused due to the abnormal value corresponding to the first parameter, thereby causing a call abnormality.

For example, for an implementation of ignoring an abnormal value corresponding to the first parameter referring to updating the value corresponding to the first parameter, specifically, references may be made to a manner 1 or a manner 2 described in the following embodiments to update the value corresponding to the first parameter.

For example, in some implementations, an operation of updating the value corresponding to the first parameter or a value corresponding to a parameter whose parameter value is abnormal may be uniformly represented as updating a configuration item in which the parameter is located, that is, updating the configuration item. In the following, updating a representation of a configuration item is used as an example for description.

It should be noted that in an actual application, updating the configuration items according to the manner 1 or the manner 2 may be understood as updating configurations of the configuration items, or may be understood as updating values of the configuration items, or may be understood as updating content of the configuration items. In this application, updating a value corresponding to an abnormal parameter in the configuration items is used as an example for description.

According to the first aspect, after the first RRC reconfiguration message is successfully verified, the method further includes: performing RRC reconfiguration according to the first RRC reconfiguration message, and feeding back an RRC reconfiguration complete message after completing RRC reconfiguration.

The RRC reconfiguration complete message is, for example, the following RRC Reconfiguration Complete.

According to the first aspect or any one of the foregoing implementations of the first aspect, the ignoring an abnormal value corresponding to the first parameter includes: updating the value corresponding to the first parameter.

According to the first aspect or any one of the foregoing implementations of the first aspect, the value corresponding to the first parameter further includes a second value, the first RRC reconfiguration message carries a second configuration item about the first cell, and the second configuration item includes the first parameter and the second value corresponding to the first parameter; and the ignoring an abnormal value corresponding to the first parameter when a value corresponding to the first parameter is abnormal includes: in a case that the first value is different from the second value, ignoring the first value corresponding to the first parameter.

According to the first aspect or any one of the foregoing implementations of the first aspect, the ignoring an abnormal value corresponding to the first parameter includes: updating the first value corresponding to the first parameter to the second value.

That is, when a value that is currently received from a network side and corresponding to a same parameter is different from a value that is locally stored in the terminal device and corresponding to the parameter, the configuration item may be updated in the following manner 2. Specifically, the value corresponding to the abnormal parameter in the configuration item is updated to the value corresponding to the parameter currently received from the network side (refer to S409a in the following embodiment). In this way, the value corresponding to the abnormal parameter in the configuration item is updated, so that the first RRC reconfiguration message is verified successfully, and the terminal device can continue to camp on the first cell to normally perform a call.

According to the first aspect or any one of the foregoing implementations of the first aspect, the first information includes information of a second cell, and the first RRC reconfiguration message is used to indicate the terminal device to be handed over from the first cell to the second cell; and the ignoring an abnormal value corresponding to the first parameter when a value corresponding to the first parameter is abnormal includes: when the value corresponding to the first parameter is incompatible with the information of the second cell, ignoring the abnormal value corresponding to the first parameter.

According to the first aspect or any one of the foregoing implementations of the first aspect, the ignoring an abnormal value corresponding to the first parameter includes: updating the value corresponding to the first parameter from the first value to a third value.

That is, in a case in which the first RRC reconfiguration message is used to indicate the terminal device to be handed over from the first cell to the second cell, the first information generally includes related information of the second cell, for example, whether the second cell currently supports the first parameter and the first value corresponding to the first parameter. Therefore, when the first information does not match or is incompatible with the first parameter and the first value corresponding to the first parameter, it may be determined that the value corresponding to the first parameter is incompatible with the information of the second cell. In this case, the configuration item may be updated in the following manner 1. Specifically, a value corresponding to an abnormal parameter in the configuration item is updated to a value indicating that the parameter does not take effect, for example, the foregoing third value. In this way, the value corresponding to the abnormal parameter in the configuration item is updated to a value indicating that the parameter is invalidated, so that the first RRC reconfiguration message is successfully verified, and the terminal device can camp on the second cell, thereby implementing a normal call in the second cell.

According to the first aspect or any implementation of the first aspect, the first cell is a cell of a TDD system, and the second cell is a cell of an FDD system.

For example, the first cell is the Cell B of the TDD system, and the second cell is the Cell C of the FDD system described below.

According to the first aspect or any foregoing implementation of the first aspect, the first configuration item is a configuration item of an SRS resource in an antenna switching mode.

For example, when the first configuration item is the configuration item of the SRS resource in the antenna switching mode, the first parameter is, for example, srs_tx_switch described below, and the first value corresponding to the first parameter is, for example, "1".

According to the first aspect or any implementation of the first aspect, the first value is 1, and the third value is 0.

For example, when the first configuration item is the configuration item of the SRS resource in the antenna switching mode, the first parameter is, for example, srs_tx_switch described below, the first value corresponding to the first parameter is, for example, "1", and the third value is, for example, "0". In this case, updating the first configuration item is, for example, updating srs_tx_switch=1 to srs_tx_switch=0 described below.

According to the first aspect or any implementation of the first aspect, the ignoring an abnormal value corresponding to the first parameter includes: ignoring the abnormal value corresponding to the first parameter when the first parameter is an ignorable parameter; where that the first parameter is an ignorable parameter includes: the first parameter is the same as any parameter in a parameter list stored in the terminal device, the parameter list includes at least one parameter, and a parameter value respectively corresponding to the at least one parameter is ignorable.

The parameter list stored in the terminal device and the configuration item list described below indicate a same list. In the following embodiments, an updatable configuration item recorded in the configuration item list is a negligible parameter described herein.

According to the first aspect or any implementation of the first aspect, an ignorable parameter in the parameter list is determined according to an existing standard protocol, and is pre-stored in the terminal device. In this way, an ignorable parameter corresponding to each cell is determined according to the existing standard protocol, so that the terminal device can perform RRC reconfiguration in various cells.

According to the first aspect or any implementation of the first aspect, the ignoring the abnormal value corresponding to the first parameter when the first parameter is an ignorable parameter includes: when the first parameter is an ignorable parameter, and the terminal device supports a compatibility function, ignoring the abnormal value corresponding to the first parameter, where that the terminal device supports a compatibility function indicates that the terminal device supports ignoring an abnormal value corresponding to an ignorable parameter.

That the terminal device supports the compatibility function means, for example, that the UE enables the compatibility function described below. For determining whether the terminal device supports the compatibility function, refer to the following S313 or the description part in S405. Details are not described herein. S313 or S405 may be an optional step. In this case, the terminal device may support the compatibility function by default.

According to the first aspect or any implementation of the first aspect, the method further includes: When the first parameter is an ignorable parameter, and the terminal device does not support the compatibility function, returning an RRC connection re-establishment message to the base station corresponding to the first cell.

The RRC connection re-establishment message is, for example, RRC Connection re-establishment described below.

That the terminal device does not support the compatibility function means, for example, that the compatibility function is not enabled as described below.

For a procedure in which the terminal device returns the RRC connection re-establishment message to the first cell, to trigger RRC connection re-establishment, refer to the following description part in which the UE executes the RLF procedure to reselect a cell for camping, for example, select the original cell or a new cell for camping, such as S113 to S115, or S213 to S220, or S314 to S316.

According to the first aspect or any one implementation of the first aspect, the first configuration item is a configuration received by the terminal device in a cell on which the terminal device camps before camping on the first cell.

For example, when the first cell is the following Cell B, the cell on which the terminal device camps before camping on the first cell may be, for example, the following Cell A.

Correspondingly, when the cell on which the UE camps before camping on the first cell is the Cell A, the first configuration item is, for example, a configuration carried in an RRC reconfiguration message sent by the base station corresponding to the Cell A to the terminal device, for example, the following RRC reconfiguration message 1 or RRC reconfiguration message 2.

According to the first aspect or any implementation of the first aspect, when the first information is information for the first cell, the performing RRC reconfiguration according to the first RRC reconfiguration message, and feeding back an RRC reconfiguration complete message after completing RRC reconfiguration includes: performing RRC reconfiguration according to the first RRC reconfiguration message, and feeding back the RRC reconfiguration complete message to the base station corresponding to the first cell after completing RRC reconfiguration. For details, refer to S409a and S409b in the following embodiments.

According to the first aspect or any implementation of the first aspect, when the first RRC reconfiguration message indicates the terminal device to be handed over from the first cell to the second cell, the performing RRC reconfiguration according to the first RRC reconfiguration message, and feeding back an RRC reconfiguration complete message after completing RRC reconfiguration includes: performing RRC reconfiguration according to the first RRC reconfiguration message, and returning the RRC reconfiguration complete message to a base station corresponding to the second cell after completing RRC reconfiguration and camping on the second cell. For details, refer to S409c and S409d in the following embodiments.

The second cell is a cell to which a terminal device (UE) needs to be handed over. Specifically, in this application, in a case in which cells to which the UE can be handed over have the Cell A, the Cell B, and the Cell C, when the first cell is the Cell B, the second cell may be the Cell A, or may be the Cell C. For ease of describing the method for a call provided in this application, in the following, that the second cell is the Cell C is used as an example.

Specifically, in this application, in a scenario in which the second cell is the Cell C, the first RRC reconfiguration message described herein is, for example, the RRC reconfiguration message 4 described below. In this scenario, an incompatible first configuration item is, for example, the configuration item of the SRS resource in the antenna switching mode configured in the RRC reconfiguration message 3 in the following.

According to a second aspect, this application provides a method for a call. The method is applied to a terminal device and includes: in a process of performing a call in a first cell, receiving a first RRC reconfiguration message sent by a base station corresponding to the first cell; verifying the first RRC reconfiguration message; and in a process of verifying the first RRC reconfiguration message, when a parameter whose parameter value is abnormal exists, ignoring an abnormal parameter value corresponding to the parameter, so that the first RRC reconfiguration message is successfully verified.

The first cell is a cell on which the terminal device (UE) currently camps, for example, may be the Cell A, the Cell B, or the Cell C described below. Specifically, in this application, in the following, that the first cell is the Cell B is used as an example.

The RRC reconfiguration message is the following RRC Reconfiguration sent by a base station corresponding to the cell to the UE.

Verification on the first RRC reconfiguration message may include, for example, verification on content in the first RRC reconfiguration message sent by the first cell, and verification on a parameter included in a configuration item locally stored by the terminal device and a parameter value corresponding to the parameter.

Therefore, an abnormal parameter value corresponding to a parameter whose parameter value is abnormal and that is obtained by the terminal device through verification in an RRC reconfiguration procedure is ignored, so that the first RRC reconfiguration message can be successfully verified, thereby ensuring that the terminal device can complete RRC reconfiguration and reducing a probability of RRC reconfiguration failure.

According to the second aspect, the ignoring an abnormal parameter value corresponding to the parameter includes: updating a parameter value corresponding to the parameter.

According to the second aspect or any implementation of the second aspect, the ignoring an abnormal parameter value corresponding to the parameter includes: ignoring the abnormal parameter value corresponding to the parameter when the parameter whose parameter value is abnormal is an ignorable parameter, that a parameter whose parameter value is abnormal is an ignorable parameter includes that the parameter whose parameter value is abnormal is the same as any parameter in a parameter list stored in the terminal device, the parameter list includes at least one parameter, and a parameter value respectively corresponding to the at least one parameter is ignorable.

The parameter list stored in the terminal device and the configuration item list described below indicate a same list. In the following embodiments, an updatable configuration item recorded in the configuration item list is a negligible parameter described herein.

According to the second aspect or any implementation of the second aspect, an ignorable parameter in the parameter list is determined according to an existing standard protocol, and is pre-stored in the terminal device. In this way, an ignorable parameter corresponding to each cell is determined according to the existing standard protocol, so that the terminal device can perform RRC reconfiguration in various cells.

According to the second aspect or any implementation of the second aspect, the ignoring the abnormal parameter value corresponding to the parameter when the first parameter is an ignorable parameter includes: when the parameter whose parameter value is abnormal is an ignorable parameter, and the terminal device supports a compatibility function, ignoring the abnormal parameter value corresponding to the parameter, where that the terminal device supports a compatibility function indicates that the terminal device supports ignoring an abnormal value corresponding to an ignorable parameter.

That the terminal device supports the compatibility function means, for example, that the UE enables the compatibility function described below. For determining whether the terminal device supports the compatibility function, refer to the following S313 or the description part in S405. Details are not described herein. S313 or S405 may be an optional step. In this case, the terminal device may support the compatibility function by default.

According to the second aspect or any implementation of the second aspect, the method further includes: When the parameter whose parameter value is abnormal is an ignorable parameter, and the terminal device does not support the compatibility function, returning an RRC connection re-establishment message to the base station corresponding to the first cell.

The RRC connection re-establishment message is, for example, RRC Connection re-establishment described below.

That the terminal device does not support the compatibility function means, for example, that the compatibility function is not enabled as described below.

For a procedure in which the terminal device returns the RRC connection re-establishment message to the first cell, to trigger RRC connection re-establishment, refer to the following description part in which the UE executes the RLF procedure to reselect a cell for camping, for example, select the original cell or a new cell for camping, such as S113 to S115, or S213 to S220, or S314 to S316.

According to a third aspect, this application provides a terminal device. The terminal device includes a memory and a processor. The memory is coupled to the processor. The memory stores program instructions, and when the program instructions are executed by the processor, the terminal device is enabled to perform the instructions of the method in any one of the first aspect or the possible implementations of the first aspect.

The third aspect and any implementation of the third aspect are respectively corresponding to the first aspect and any implementation of the first aspect; or respectively corresponding to the second aspect and any implementation of the second aspect. For technical effects corresponding to the third aspect and any implementation of the third aspect, refer to technical effects corresponding to the first aspect and any implementation of the first aspect, or technical effects corresponding to the second aspect and any implementation of the second aspect. Details are not described herein again.

According to a fourth aspect, this application provides a computer-readable medium, configured to store a computer program, and the computer program includes instructions for performing the method in the first aspect or any possible implementation of the first aspect.

The fourth aspect and any implementation of the fourth aspect are respectively corresponding to the first aspect and any implementation of the first aspect; or respectively corresponding to the second aspect and any implementation of the second aspect. For technical effects corresponding to the fourth aspect and any implementation of the fourth aspect, refer to technical effects corresponding to the first aspect and any implementation of the first aspect, or technical effects corresponding to the second aspect and any implementation of the second aspect. Details are not described herein again.

According to a fifth aspect, this application provides a computer program, and the computer program includes instructions for performing the method in the first aspect or any possible implementation of the first aspect.

The fifth aspect and any implementation of the fifth aspect are respectively corresponding to the first aspect and any implementation of the first aspect; or respectively corresponding to the second aspect and any implementation of the second aspect. For technical effects corresponding to the fifth aspect and any implementation of the fifth aspect, refer to technical effects corresponding to the first aspect and any implementation of the first aspect, or technical effects corresponding to the second aspect and any implementation of the second aspect. Details are not described herein again.

According to a sixth aspect, this application provides a chip system, and the chip system includes a processor. The processor is configured to support a terminal device in implementing instructions of the method in the first aspect or any possible implementation of the first aspect.

According to the sixth aspect, the processor includes a modem.

Correspondingly, that the processor is configured to support a terminal device in implementing instructions of the method in the first aspect or any possible implementation of the first aspect specifically includes:

The modem is configured to support the terminal device in implementing the instructions of the method in the first aspect or any possible implementation of the first aspect.

The sixth aspect and any implementation of the sixth aspect are respectively corresponding to the first aspect and any implementation of the first aspect; or respectively corresponding to the second aspect and any implementation of the second aspect. For technical effects corresponding to the sixth aspect and any implementation of the sixth aspect, refer to technical effects corresponding to the first aspect and any implementation of the first aspect, or technical effects corresponding to the second aspect and any implementation of the second aspect. Details are not described herein again.

### BRIEF DESCRIPTION OF DRAWINGS

FIG. 1 is a schematic diagram of a mobile communication architecture by way of example;
FIG. 2A is a schematic diagram of interaction between a UE and a network side when RRC reconfiguration is successful shown by way of example;
FIG. 2B is a schematic diagram of interaction between a UE and a network side when RRC reconfiguration fails shown by way of example;
FIG. 3A and FIG. 3B are a schematic diagram of a cell handover failure in an RRC reconfiguration procedure shown by way of example;
FIG. 4A and FIG. 4B are a schematic diagram of a cell handover failure in another RRC reconfiguration procedure shown by way of example;
FIG. 5A and FIG. 5B are a schematic diagram of implementing RRC reconfiguration based on a method for a call according to an embodiment of this application shown by way of example;
FIG. 6 is another schematic diagram of implementing RRC reconfiguration based on a method for a call according to an embodiment of this application shown by way of example;
FIG. 7 is a schematic diagram of a software structure and hardware of a terminal device shown by way of example; and
FIG. 8 is a schematic diagram of a hardware structure of a terminal device shown by way of example.

### DESCRIPTION OF EMBODIMENTS

The technical solutions of the embodiments of this application are clearly and completely described below with reference to the accompanying drawings of the embodiments of this application. Clearly, the described embodiments are some rather than all of the embodiments of this application. All other embodiments obtained by persons of ordinary skill in the art based on the embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of target objects.

In the embodiments of this application, words such as "example" or "for example" are used to indicate an example, illustration, or description. Any embodiment or design solution described as an "example" or "for example" in embodiments of this application should not be explained as being more preferred or having more advantages than other embodiments or design solutions. Exactly, the words such as "example" or "for example" are intended to present related concepts in a specific manner.

In the description of the embodiments of this application, unless otherwise stated, "a plurality of" means two or more. For example, a plurality of processing units refer to two or more processing units, and a plurality of systems refer to two or more systems.

Based on the foregoing premise, the following describes the technical solutions provided in the embodiments of this application.

Specifically, the technical solutions provided in the embodiments of this application are targeted for processing logic performed when an RRC reconfiguration procedure is performed for a call process between a calling party and a called party. To better describe the technical solutions provided in the embodiments of this application, a mobile communication architecture targeted by a method for a call provided in the embodiments of this application is first described with reference to the accompanying drawings.

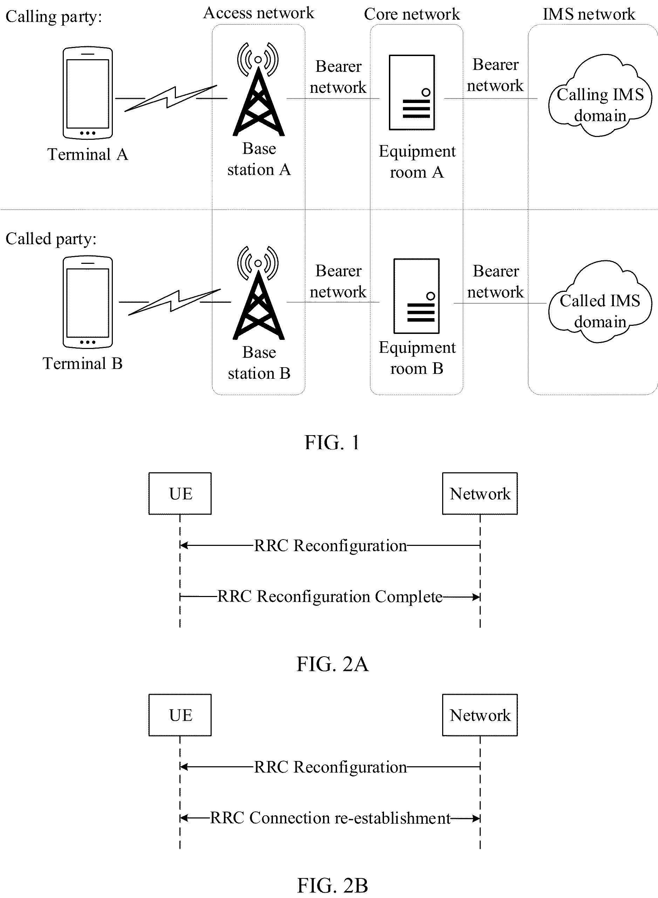

FIG. 1 shows an example mobile communication architecture. The mobile communication architecture shows a terminal device, a (radio) access network, a core network, and an IP multimedia subsystem (IP Multimedia Subsystem, IMS network) that are required to implement a voice/audio/video call service.

Still referring to FIG. 1, for example, the terminal device may include a calling party (such as a terminal A) that initiates a call service and a called party (such as a terminal B) that responds to the call service. The access network may include a base station (for example, a base station A) corresponding to the terminal A and a base station (for example, a base station B) corresponding to the terminal B. The core network may include an operator equipment room (such as an equipment room A) corresponding to the base station A and an operator equipment room (such as an equipment room B) corresponding to the base station B. The IMS network may include a calling IMS domain (network) and a called IMS domain (network) corresponding to the terminal A.

For example, in some implementations, the base station A and the base station B may be the same, for example, in a scenario in which the terminal A and the terminal B face a same operator, and the terminal A and the terminal B access a same cell (Cell),

For example, in some other implementations, the base station A and the base station B may be two different base stations, for example, in a scenario in which the terminal A and the terminal B face different operators; or in a scenario in which the terminal A and the terminal B face a same operator, but the terminal A is located in one city or cell, and the terminal B is located in another city or cell.

For example, in a scenario in which the base station A and the base station B are the same, the equipment room A and the equipment room B may be the same, or may be two different equipment rooms.

It should be understood that the foregoing description is merely an example provided to better understand the technical solution of this embodiment, and is not used as a unique limitation on this embodiment.

Based on the mobile communication architecture shown in FIG. 1, when initiating a call service to the terminal B, the terminal A establishes a media session (Media Session) between the terminal A and the terminal B. In the following embodiment and the call process described in the accompanying drawings, the terminal A sends a SIP request message to the called IMS domain by using the base station A, the equipment room A, and the calling IMS domain. Then the message is sent to terminal B through the called IMS domain, the equipment room B, and base station B. Correspondingly, a SIP response message made by the terminal B for the SIP request message initiated by the terminal A is fed back to the terminal A through the base station B, the equipment room B, the called IMS domain, the calling IMS domain, the equipment room A, and the base station A. In this way, establishment of a media session between the terminal A and the terminal B is implemented.

It should be noted that SIP refers to the Session Initiation Protocol (Session initialization Protocol). SIP is a multimedia communication protocol formulated by the Internet Engineering Task Force (Internet Engineering Task Force, IETF). It is a text-based application layer control protocol used to create, modify, and release sessions of one or more participants.

For example, specifically, in a process of establishing a media session between the terminal A and the terminal B, involved SIP request messages may include, for example, INVITE, ACK, and PRACK. Involved SIP response messages may include, for example, 200 OK, and various response messages that start with "1", such as 100 Trying, 183 Session Progress, and 180 Ringing.

In addition, it should be further noted that, when the terminal A or the terminal B initiates a hang-up call operation, the involved SIP request message (for example, BYE) is also transmitted to the IMS domain, the equipment room, and the base station corresponding to the terminal B through the terminal that initiates BYE, for example, the base station, the equipment room, and the IMS domain corresponding to the terminal A, to finally reach the terminal B. Correspondingly, after introducing BYE sent by the terminal A, the terminal B makes a 200 OK SIP response message, and sends the 200 OK SIP response message to the terminal A through the base station B, the equipment room B, the called IMS domain, the calling IMS domain, the equipment room A, and the base station A. In this case, the media session between the terminal A and the terminal B is disconnected.

It should be understood that the foregoing description is merely an example provided to better understand the technical solution of this embodiment, and is not used as a unique limitation on this embodiment. For a specific procedure of establishing a media session between the terminal A and the terminal B, a specific procedure of terminating the media session, and meanings of all SIP request messages and SIP response messages involved, refer to an existing protocol standard. Details are not described herein.

In addition, it should be further understood that normal communication depends on a radio network resource determined by a base station and a terminal device (hereinafter referred to as UE (User Equipment)) based on RRC. With development of communication technologies, for example, a 5G network, to ensure that a radio network resource can be better adapted to an actual service scenario in a call process, RRC reconfiguration is introduced, so as to implement modification to an RRC connection between a UE and a base station. For example, an RB (Resource Block, resource block) is established/modified/released, cell handover (base station handover) is performed, and a measurement report is set/modified/released.

In addition, it should also be understood that RRC reconfiguration may also be implemented in a 4G network. Specifically, in a 4G network, RRC reconfiguration is referred to as RRC connection reconfiguration (RRC Reconfiguration). For ease of description, RRC reconfiguration performed in a 5G network is used as an example for description in this embodiment.

Specifically, in the 5G network, RRC reconfiguration is initiated by a network side (5G base station). That is, the base station actively sends an RRC reconfiguration message to a corresponding UE, as shown in "RRC Reconfiguration" in FIG. 2A.

For example, the RRC reconfiguration message may carry a measurement configuration indicating the UE to perform a measurement reporting operation, a configuration of an SRS resource in an antenna switching mode, a configuration of an encryption and decryption algorithm used by a data packet for exchange with a base station, and the like. Examples are not listed one by one herein. Only a configuration involved in a scenario enumerated in a subsequent embodiment is used as an example. For specific content and formats of the RRC reconfiguration message that carries different configurations, refer to an existing standard protocol. Details are not described herein.

For example, when the UE receives the RRC reconfiguration message (for example, carrying a measurement configuration indicating the UE to perform a measurement reporting operation) sent by the 5G base station (a base station corresponding to a cell in which the UE is currently located), the UE performs a measurement reporting operation according to the measurement configuration, and feeds back a generated measurement report to the 5G base station. The 5G base station delivers, to the UE according to the measurement report, an RRC reconfiguration message indicating the UE to be handed over to a target base station, so that the UE is handed over from the currently accessed 5G base station to the target base station. In addition, based on provisions of the existing standard protocol, the UE completes RRC reconfiguration according to the RRC reconfiguration message sent by the 5G base station, that is, after being handed over to the target base station, the UE returns, to the target base station, a message indicating that the RRC reconfiguration is completed, as shown in "RRC Reconfiguration Complete" in FIG. 2A. On the contrary, if the target base station cannot match or be compatible with the configuration in the RRC reconfiguration message sent by the 5G base station, the UE cannot be handed over to the target base station. In addition, based on provisions of the existing standard protocol, the UE performs an RLF (radio link fault, RLF) procedure, such as releasing a connection to the 5G base station of the current cell, and performs reselection to select a cell, so as to perform an RRC connection re-establishment procedure with a reselected 5G base station, as shown in "RRC Connection re-establishment" in FIG. 2B. When the reselected 5G base station is a just disconnected 5G base station, because RRC between the UE and the 5G base station is originally normal, after implementing RRC Connection re-establishment with the UE, the 5G base station considers that the current RRC connection is abnormal. Based on provisions of the existing standard protocol, the 5G base station delivers a BYE message for terminating a current call to the UE, and then hangs up the current call.

Based on the foregoing provisions of the existing standard protocol, if the RRC reconfiguration message delivered by the 5G base station is configured strictly according to the existing standard protocol, for example, in a case in which the target base station does not support some configurations, canceling these configurations in the RRC reconfiguration message indicating the UE to be handed over to the target base station, an RRC Connection re-establishment procedure is not to be triggered.

However, in an actual application scenario, it is found that a case in which 5G base stations in some regions do not generate an RRC reconfiguration message completely according to the existing standard protocol exists. This causes a handover failure when the UE performs cell handover according to the RRC reconfiguration message, thereby causing a call interruption.

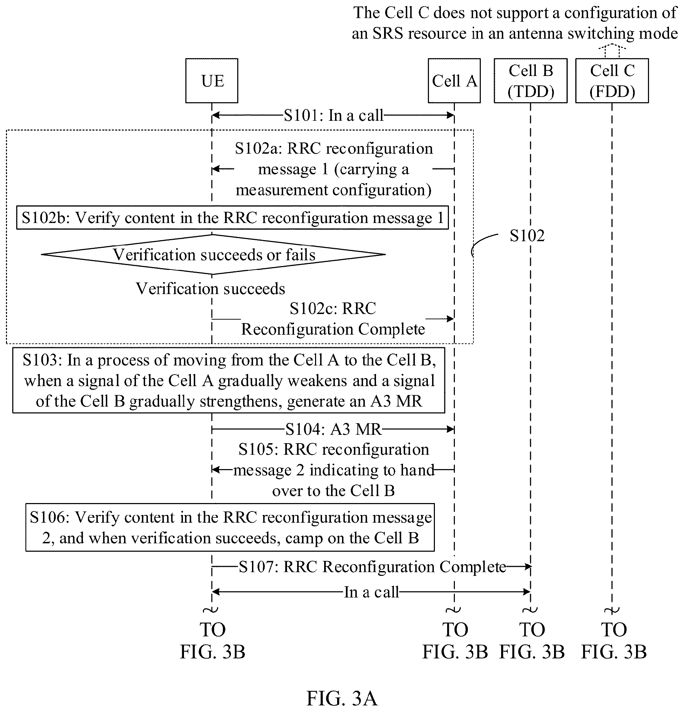

For better understanding, the following describes, with reference to FIG. 3A to FIG. 4B, two specific cases that cause an RRC reconfiguration failure.

Before the two specific cases that cause an RRC reconfiguration failure are described, some descriptions involved in the following embodiments are first described.

Specifically, in the embodiments of this application, a verification operation performed by the UE when receiving the RRC reconfiguration message delivered by the network side includes verification on information in the RRC reconfiguration message currently received from the network side, and verification on content of a configuration item locally stored by the UE, such as a parameter and a value corresponding to the parameter. It may be specifically understood that the UE performs union processing on the information in the RRC reconfiguration message delivered by the network side and the content of the locally stored configuration item, and then verifies all obtained content, for example, verifies whether the content matches or is compatible with each other. For ease of description, in this application, verifying an RRC reconfiguration message is directly described in the accompanying drawings and the embodiments.

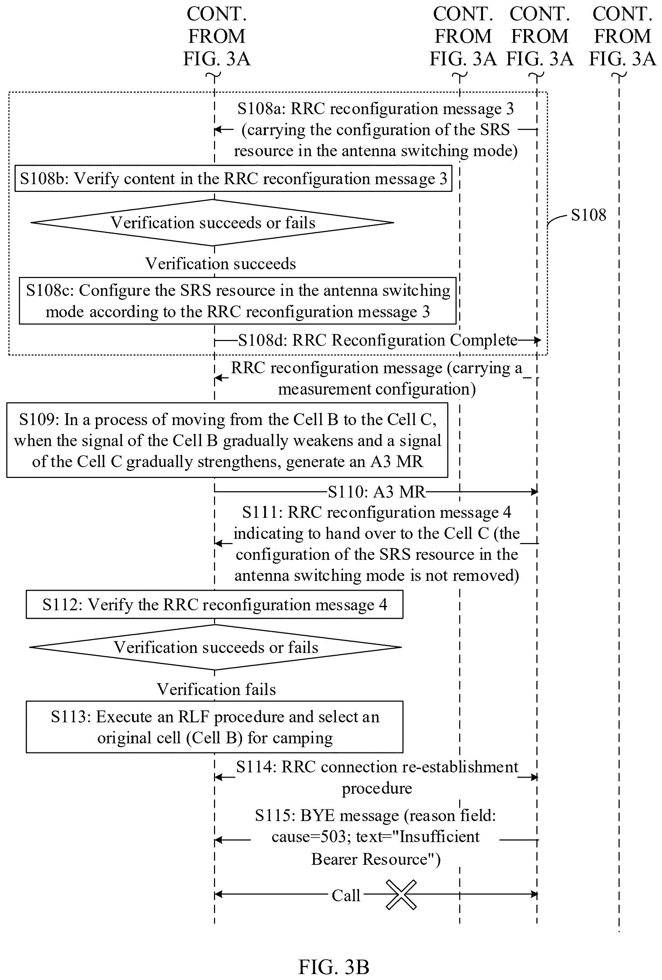

Referring to FIG. 3A and FIG. 3B, for example, it is assumed that base stations corresponding to a cell A (Cell A), a cell B (Cell B), and a cell C (Cell C) are all 5G base stations, that is, all the base stations support delivering an RRC reconfiguration message.

Still referring to FIG. 3A and FIG. 3B, for example, in a scenario shown in FIG. 3A and FIG. 3B, a frequency band corresponding to the Cell B is a time division duplexing (Time Division Duplexing, TDD) mode, for example, an n78 cell whose frequency is in an n78 frequency range, and a frequency band corresponding to the Cell C is a frequency division duplexing (Frequency Division Duplexing, FDD) mode, for example, an n1 cell whose frequency is in an n1 frequency range.

Still referring to FIG. 3A, for example, when the UE establishes a media session with a called party through the base station, a core network, and an IMS domain that are corresponding to the Cell A, and an IMS domain, a core network, and a base station that are corresponding to the called party, that is, in a process in which the UE performs a call in the Cell A (S101), the Cell A may perform an RRC Reconfiguration procedure with the UE (S102).

Still referring to FIG. 3A, for example, the RRC Reconfiguration procedure in S102 may include S102a, S102b, and S102c.

For example, S102a is a step of delivering an RRC reconfiguration message to the UE by the base station in the Cell A (directly described as the cell subsequently). In this embodiment, the RRC reconfiguration message delivered by the Cell A to the UE is an RRC reconfiguration message (hereinafter referred to as an RRC reconfiguration message 1) that carries a measurement configuration.

For example, S102b is a step of verifying, by the UE, content in the RRC reconfiguration message 1. Specifically, the UE verifies, according to an existing standard protocol and an attribute of the Cell A, whether information (an information element) configured for the Cell A in the RRC reconfiguration message 1 is proper.

For example, if the UE successfully verifies the RRC reconfiguration message 1, that is, no abnormal information element (or configuration item) exists in the RRC reconfiguration message 1, the UE performs RRC reconfiguration according to the RRC reconfiguration message 1, and after completing RRC reconfiguration, performs S102c. That is, RRC Reconfiguration Complete is sent to the Cell A to notify the Cell A that RRC reconfiguration for the RRC reconfiguration message 1 is completed.

For example, if the UE fails to verify the RRC reconfiguration message 1, the UE performs RLF, releases a connection to the Cell A, and then reselects a cell for camping. When reselecting a cell for camping, the UE may select an original cell, that is, a currently accessed cell for camping, or may select a new cell for camping. For detailed processing after a verification failure, refer to S113 to S115. Details are not described herein.

For example, in this embodiment, verification performed on the content in the RRC reconfiguration message 1 in S102b is a verification success, that is, the UE performs S102c.

Still referring to FIG. 3A and FIG. 3B, for example, because the RRC reconfiguration message 1 carries the measurement configuration, after the UE completes RRC reconfiguration according to the RRC reconfiguration message 1, the UE performs a measurement reporting operation.

It may be understood that RRC reconfiguration is to ensure that a radio network resource can be better adapted to an actual service scenario in a call process. Therefore, it needs to be ensured that a signal of a cell to be handed over to is stronger than a signal of a currently accessed cell. Therefore, the measurement configuration carried in the RRC reconfiguration message may be a measurement configuration that triggers the UE to perform an A3 event (subsequently, for example, a measurement configuration carried in another RRC reconfiguration message is to trigger the UE to perform an A3 event).

Based on this, the UE performs S103 according to the measurement configuration, that is, in a process in which the UE moves from the Cell A to the Cell B, when a signal of the Cell A gradually weakens and a signal of the Cell B gradually strengthens, the UE generates an A3 measurement report (A3 MR).

Still referring to FIG. 3A, for example, after the UE generates the A3 MR, the UE sends the A3 MR to the Cell A, that is, performs S104.

Still referring to FIG. 3A, for example, after receiving the A3 MR sent by the UE, the Cell A delivers, to the UE, an RRC reconfiguration message 2 indicating the UE to be handed over to the Cell B, that is, performs S105.

It may be understood that the A3 MR generated by the UE may include address information of the Cell B whose signal gradually strengthens. Therefore, the RRC reconfiguration message 2 sent by the Cell A to the UE may carry the address information of the Cell B to be handed over to, so that the UE is handed over to the Cell B according to the address information of the Cell B.

In addition, the RRC reconfiguration message 2 may further carry related information of the Cell B, such as an attribute and a configuration item that is currently configured, which is not listed one by one herein. This is not limited in this application.

It may be understood that when receiving any RRC reconfiguration message delivered by the network side, the UE needs to perform a verification operation. Therefore, after receiving the RRC reconfiguration message 2 delivered by the Cell A, the UE also verifies content in the RRC reconfiguration message 2.

For example, if the UE successfully verifies the RRC reconfiguration message 2, the UE is handed over to the Cell B according to the address information of the Cell B carried in the RRC reconfiguration, and before receiving a next instruction for cell handover, the UE camps on the Cell B.

It should be understood that, after the UE camps on the Cell B, in a case in which a call is not hung up, the current media session continues in the Cell B, that is, the call between the UE and the Cell A in S101 is performed between the UE and the Cell B.

For example, if the UE fails to verify the RRC reconfiguration message 2, the UE performs an RLF procedure, such as releasing a connection to a cell in which the UE is currently located, and then reselects a cell for camping. When reselecting a cell for camping, the UE may also select an original cell for camping, or may select a new cell for camping. For detailed processing after a verification failure, refer to S113 to S115. Details are not described herein.

For example, in this embodiment, verification performed by the UE on the content in the RRC reconfiguration message 2 is a verification success. That is, after receiving the RRC reconfiguration message 2 sent by the Cell A, the UE performs S 106.

Because a result of S106 is that verification performed by the UE on the content in the RRC reconfiguration message 2 is a verification success, after camping on the Cell B, the UE further sends RRC Reconfiguration Complete to the Cell A to notify the Cell A that RRC reconfiguration (handover to the Cell B) performed on the RRC reconfiguration message 2 is completed, that is, performs S107.

Still referring to FIG. 3B, for example, if the call continues between the UE and the Cell B, the Cell B performs an RRC Reconfiguration procedure with the UE (S108).

Still referring to FIG. 3B, for example, the RRC Reconfiguration procedure in S108 may include S 108a, S 108b, S108c, and S108d.

For example, S108a is a step of delivering an RRC reconfiguration message to the UE by the base station in the Cell B (directly described as the cell subsequently). In this embodiment, for example, the RRC reconfiguration message delivered by the Cell B to the UE is an RRC reconfiguration message (hereinafter referred to as an RRC reconfiguration message 3) that carries a configuration of an SRS resource in an antenna switching mode.

The SRS (Sounding Reference Signal, sounding reference signal) is a signal used to detect channel quality of an uplink frequency band. Specifically, in an actual application, a configuration used to provide, for the UE, an SRS resource that can periodically send an SRS may be notified to the UE by using a SIB (SystemInformationBlocks, system information block) message or an RRC Connection Setup (RRC connection setup) message delivered by the network side, or the foregoing RRC reconfiguration message.

An SRS corresponding to a configuration of an SRS resource sent by using the SIB is a Cell Specific SRS (cell specific SRS). An SRS corresponding to a configuration of an SRS resource sent by using the RRC connection setup message or the RRC reconfiguration message is a Dedicated SRS (UE dedicated SRS).

The configuration of the SRS resource may support four modes: beam management, codebook, non-codebook, and antenna switching (antenna Switching).

For the beam management mode, there is an association with SSB (Synchronization Signal/PBCH Block, synchronization signal/PBCH block) beam management, and no feedback of the base station is required.

For the codebook mode, the base station obtains an SRI (SRS resource indicator, SRS resource identifier), a TPMI (Transmitted Precoding Matrix Indicator, transmitted precoding matrix indicator), and RI (RankIndicator, rank indicator) information by measuring the SRS, and then feeds back the three to the UE based on a codebook situation.

For the non-codebook mode, the base station obtains the SRI, the TPMI, and the RI information by measuring the SRS, and feeds back the SRI to the UE, and a same precoding matrix as an SRS (an SRS corresponding to the SRI, where precoding matrix selection may come from CSI-RS (Channel State Information-Reference Signal, channel state information-reference signal) measurement) is selected for a PUSCH (Physical Uplink Shared CHannel, physical uplink shared channel).

For the antenna switching mode, when downlink CSI (channel state information, channel state information) cannot be obtained, the downlink CSI is measured by using the SRS. Because the UE generally has a small quantity of transmit antennas, the UE needs to traverse all antennas in an antenna switching manner (which may be understood as transmitting the SRS on a plurality of antennas in turn by the UE) to obtain uplink CSI through measurement. Therefore, the base station obtains the downlink CSI based on the uplink CSI according to reciprocity of uplink and downlink channels, and no feedback of the base station is required. However, it may be learned, according to the provisions of the existing standard protocol, that a TDD cell (that is, a cell whose corresponding frequency band belongs to a frequency band in a TDD mode) supports a configuration of an SRS resource in the antenna switching mode, but an FDD cell (that is, a cell whose corresponding frequency band belongs to a frequency band in an FDD mode) does not support the configuration of the SRS resource in the antenna switching mode. A specific reason is as follows: For a TDD system, an uplink and a downlink share a spectrum resource, and the uplink and the downlink are distinguished by time division. In this way, in most cases, for a given UE, it can be considered that an uplink and a downlink the UE experiences are a same path, that is, spatial characteristics are approximately the same, which is also referred to as reciprocity of uplink and downlink channels. In this way, the TDD system can obtain CSI of the downlink channel by using an uplink SRS and the reciprocity of the uplink and downlink channels. Further, to obtain downlink CSI information of each channel, the base station may enable the UE to switch to different antenna ports to send the SRS in turn, so as to obtain CSI of each downlink channel by using an uplink SRS of each uplink channel. For an FDD system, a downlink and an uplink are two independent spectrum resources, and reciprocity of uplink and downlink channels cannot be used. Therefore, the SRS cannot be used to evaluate downlink channel quality in the FDD mode. Therefore, the FDD system does not support the configuration of the SRS resource in the antenna switching mode.

For a specific implementation of transmitting the SRS in turn, references may be made to the existing protocol, and details are not described herein.

For example, S108b is a step of verifying content in the RRC reconfiguration message 3 by the UE. Specifically, the UE verifies, according to the existing standard protocol and the attribute of the Cell B, whether information (an information element) configured for the Cell B in the RRC reconfiguration message 3 is proper.

It may be learned from the foregoing description that the Cell B is a TDD system, and the TDD system supports the configuration of the SRS resource in the antenna switching mode. Therefore, that the configuration of the SRS resource in the antenna switching mode is carried in the RRC reconfiguration message 3 is proper. Therefore, the UE successfully verifies the content in the RRC reconfiguration message 3. The UE performs RRC reconfiguration according to the RRC reconfiguration message 3, for example, configures the SRS resource in the antenna switching mode, that is, performs S 108c.

Still referring to FIG. 3B, for example, after RRC reconfiguration is completed according to the RRC reconfiguration message 3, the UE performs S108d. That is, RRC Reconfiguration Complete is sent to the Cell B to notify the Cell B that RRC reconfiguration for the RRC reconfiguration message 3 is completed.

Still referring to FIG. 3A and FIG. 3B, for example, in some implementations, the Cell B may further deliver an RRC reconfiguration message that carries a measurement configuration to the UE.

For example, in some other implementations, the measurement configuration that indicates the UE to perform a measurement reporting operation may alternatively be directly carried in the RRC reconfiguration message 3.

For processing of the RRC reconfiguration message by the UE, refer to S102a to S102c. Details are not described herein.

For ease of description, in this embodiment, a verification success is still used as an example, that is, the UE performs a measurement reporting operation according to the measurement configuration, that is, performs S109. Specifically, in S109, in a process in which the UE moves from the Cell B to the Cell C, when the signal of the Cell B gradually weakens and a signal of the Cell C gradually strengthens, the UE generates an A3 measurement report (A3 MR).

Still referring to FIG. 3B, for example, after the UE generates the A3 MR, the UE sends the A3 MR to the Cell B, that is, performs S110.

Still referring to FIG. 3B, for example, after receiving the A3 MR sent by the UE, the Cell B delivers, to the UE, an RRC reconfiguration message 4 indicating the UE to be handed over to the Cell C, that is, performs S111. For example, in this embodiment, the configuration of the SRS resource in the antenna switching mode is not removed from the RRC reconfiguration message 4, that is, the configuration of the SRS resource in the antenna switching mode is still reserved. After receiving the RRC reconfiguration message 4 delivered by the Cell B, the UE also verifies content in the RRC reconfiguration message 4, that is, performs S112.

It may be learned from the foregoing description that the Cell C is an FDD system, and the FDD system does not support the configuration of the SRS resource in the antenna switching mode. Therefore, according to the provisions of the existing standard protocol, the Cell B should send, to the UE before the RRC reconfiguration message 4, an RRC reconfiguration message used to remove the configuration of the SRS resource in the antenna switching mode, so as to indicate the UE to release a configured SRS resource in the antenna switching mode. Alternatively, the RRC reconfiguration message 4 directly carries information used to remove the configuration of the SRS resource in the antenna switching mode.

However, in the scenario shown in FIG. 3A and FIG. 3B, when the Cell B delivers the RRC reconfiguration message 4 to the UE, the RRC reconfiguration message 4 does not carry the information used to remove the configuration of the SRS resource in the antenna switching mode. However, in S108d, the UE configures the SRS resource in the antenna switching mode. A configuration of a parameter previously received in the Cell B that is stored in the UE is not deleted by a network according to the protocol. When the UE applies the previously stored configuration of the parameter in the Cell B to the Cell C to be handed over to, because the Cell C does not support the configuration of the parameter, a problem that the configuration of the parameter in the UE is incompatible with or does not match the Cell C occurs, which causes an RRC reconfiguration message verification failure. It should be understood that one RRC reconfiguration message being verified is involved in this specification. In some actual scenarios, a terminal device verifies information (or referred to as content in the message) carried in the RRC reconfiguration message in combination with configuration information stored in the terminal device (the stored configuration information may come from one or more RRC reconfiguration messages before the RRC reconfiguration message), to obtain a verification result of the RRC reconfiguration message. Therefore, when the UE verifies the RRC reconfiguration message 4 (the message may include related information of the Cell C), because the Cell C does not support the configuration of the SRS resource in the antenna switching mode that has been stored in the terminal device, a result of verifying the RRC reconfiguration message 4 by the UE is a verification failure.

Still referring to FIG. 3B, for example, when the UE fails to verify the RRC reconfiguration message 4, the UE performs an RLF procedure (including releasing the connection to the Cell B), and then performs cell reselection, so as to camp on a reselected cell.

For an operation performed by the UE when verification on the RRC reconfiguration message fails, references may be made to the existing standard protocol. In this embodiment, for example, the original cell is selected for camping, that is, after the UE fails to verify the RRC reconfiguration message 4, the UE performs S113.

Still referring to FIG. 3B, for example, if the UE chooses to camp on the original cell (that is, the Cell B on which the UE camps before handover), the UE sends, to the Cell B, an RRC connection re-establishment request (RRC Connection re-establishment Request) message that carries a cause value of an RRC reconfiguration failure (such as a Reconfiguration failure), for example, sends an RRC Connection re-establishment Request that carries a Reconfiguration failure to the Cell B, so that the Cell B and the UE can perform an RRC connection re-establishment procedure, that is, perform S114.

For example, after receiving the RRC Connection re-establishment Request, the Cell B returns an RRC Connection Setup message indicating a radio bearer and a serving cell group to the UE, so that the UE re-establishes an RRC connection to the Cell B.

For a specific implementation procedure in which the UE performs RRC connection re-establishment with the base station, refer to the existing standard protocol. Details are not described herein.

For example, because the RRC Connection re-establishment Request carries the Reconfiguration failure, after RRC connection re-establishment between the UE and the Cell B is successful, the Cell B delivers a cause of the RRC reconfiguration failure to the UE immediately. Before RRC connection re-establishment is performed between the Cell B and the UE, the RRC connection therebetween is normal. Therefore, in a scenario in which the cell reselected by the UE is the original cell, the original cell, that is, the Cell B, considers that the RRC connection to the UE is abnormal. In this case, the Cell B immediately delivers a BYE message to the UE. A reason field in the BYE message carries a reason that the Cell B determines that the handover from the Cell B to the Cell C fails because of an insufficient bearer resource (Insufficient Bearer Resource), and a corresponding error code is 503, that is, S115.

Because the Cell B delivers the BYE message for releasing the current call, the call between the UE and the Cell B is to be disconnected.

It is found through analysis that in a call process, a reason of an HO (handover, handover) failure of the UE from an n78 (an n78 frequency band belongs to a frequency band in the TDD mode) to an n1 (an n1 frequency band belongs to a frequency band in the FDD mode) cell is as follows: A network (herein, the "network" specifically refers to a base station corresponding to the n78 cell) configures an SRS resource in the antenna switching mode for the UE in the n78 cell; and before handover to a cell that does not support the configuration of the SRS resource in the antenna switching mode, the network (herein, the "network" specifically refers to the base station corresponding to the n78 cell) does not indicate the UE to remove (remove) the configuration (in this case, according to provisions of a standard protocol procedure, the base station corresponding to the n78 cell should send, to the UE before indicating the UE to be handed over to another cell (the cell does not support the configuration of the SRS resource in the antenna switching mode), an RRC Reconfiguration message that carries information used to remove the configuration of the SRS resource in the antenna switching mode, so as to indicate the UE to release the SRS resource on the UE side). However, the n1 cell cannot support the configuration of the SRS resource in the antenna switching mode. Therefore, when the UE is handed over to the n1 cell, a handover failure occurs when the SRS is performed based on the SRS resource previously configured on the n78 cell for the UE by the network.

Therefore, it can be learned from the foregoing description that, the UE is not handed over from the Cell B to the Cell C not because of an insufficient bearer resource, but because a configuration incompatible with the Cell C exists in the RRC reconfiguration message 4, as described above, a configuration of an SRS resource in the antenna switching mode that is incompatible with the Cell C exists.

It should be understood that the foregoing description is merely an example provided to better understand the technical solution of this embodiment, and is not used as a unique limitation on this embodiment.

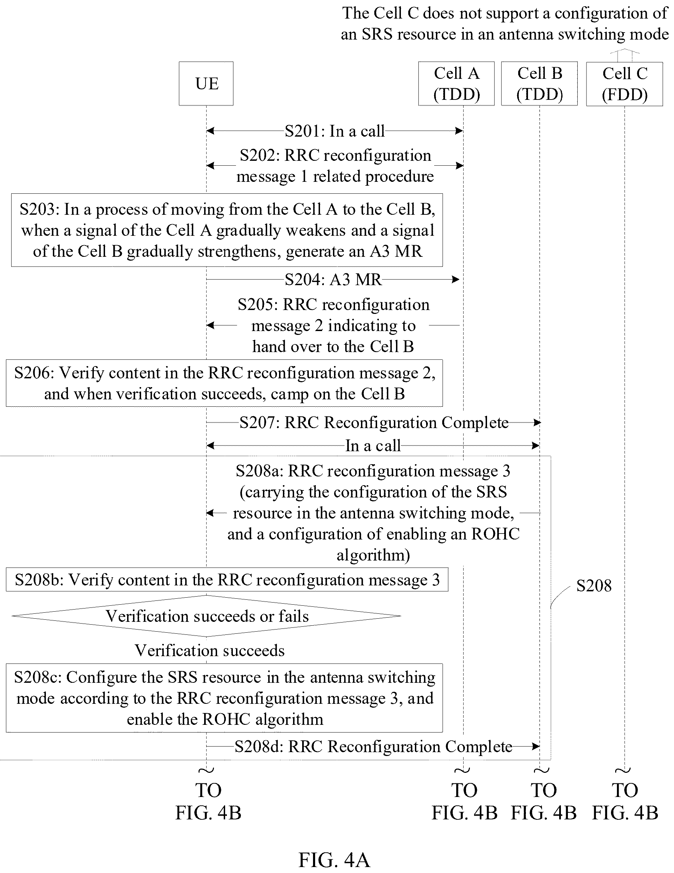

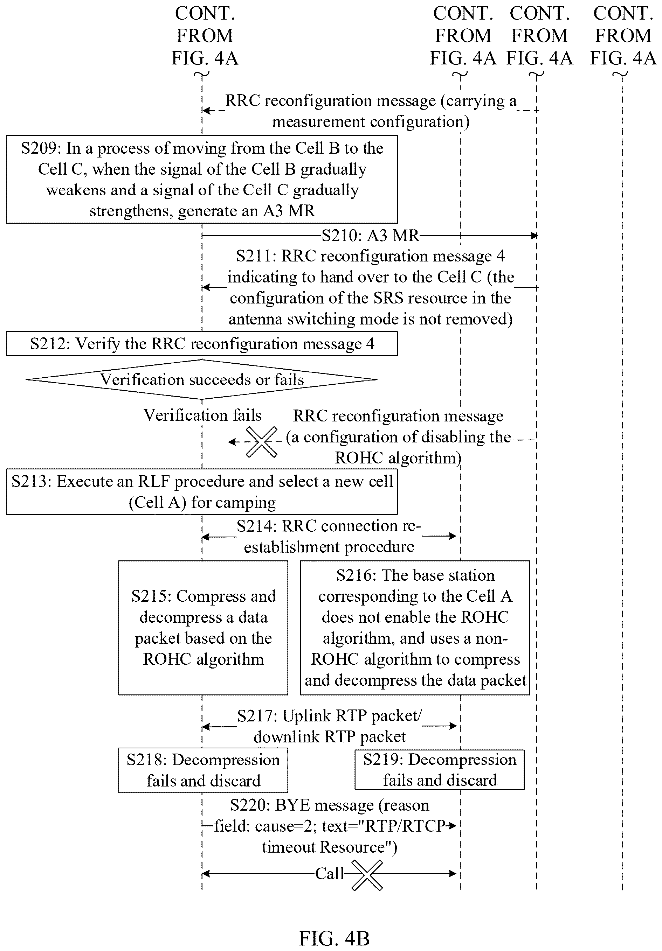

Referring to FIG. 4A and FIG. 4B, for example, a scenario in which a UE selects a new cell for camping when verification on an RRC reconfiguration message fails is used as an example.

Specifically, in this embodiment, limitations on the Cell A, the Cell B, and the Cell C in the embodiment shown in FIG. 3A and FIG. 3B are still used as an example. For specific implementation of S201 to S207, refer to S101 to S107 in the embodiment shown in FIG. 3A. Details are not described herein again. With reference to S208 to S220 shown in FIG. 4A and FIG. 4B, the following describes specific processing involved when the UE selects a new cell (for example, the Cell A, where the Cell A is a new cell as the UE just releases the connected Cell B and attempts to be handed over to the Cell C) when verification on the RRC reconfiguration message 4 fails.

S208: The UE performs an RRC Reconfiguration procedure with the Cell B.

Referring to FIG. 4A, for example, the RRC Reconfiguration procedure described in S208 may include S208a, S208b, S208c, and S208d.

For example, S208a is a step of delivering an RRC reconfiguration message to the UE by the Cell B. In this embodiment, for example, the RRC reconfiguration message 3 delivered by the Cell B to the UE is an RRC reconfiguration message that carries a configuration of an SRS resource in an antenna switching mode and a configuration of enabling an ROHC algorithm. It should be understood that, in an actual application, the configuration of the SRS resource in the antenna switching mode and the configuration of enabling the ROHC algorithm may be sent to the UE by using a same RRC reconfiguration message, or may be sent to the UE by using different RRC reconfiguration messages. This is not limited in this embodiment.

For example, S208b is a step of verifying content in the RRC reconfiguration message 3 by the UE. Specifically, the UE verifies, according to the existing standard protocol and the attribute of the Cell B, whether information (an information element) configured for the Cell B in the RRC reconfiguration message 3 is proper.

It may be understood that both the base station and the UE generally have a capability to use the ROHC algorithm (a well-known relatively ideal algorithm for compressing and decompressing a data packet header on a wireless link). By default, the UE may be set to disable the ROHC algorithm (that is, the UE does not use the ROHC algorithm). When an RRC reconfiguration message sent by the base station is received, and the RRC reconfiguration message carries a configuration of enabling the ROHC algorithm, the UE enables the ROHC algorithm.

In addition, it should be further understood that when the base station notifies the UE to enable the ROHC algorithm, the base station also enables the ROHC algorithm. In this way, when the UE camps on a cell in which the base station is located, the two may compress a sent data packet and decompress a received data packet by using the ROHC algorithm.

In addition, in this embodiment, the Cell B is a TDD system, and the TDD system supports the configuration of the SRS resource in the antenna switching mode. Therefore, that the configuration of the SRS resource in the antenna switching mode is carried in the RRC reconfiguration message 3 is proper. Therefore, the UE successfully verifies the content in the RRC reconfiguration message 3. The UE performs RRC reconfiguration according to the RRC reconfiguration message 3, for example, configures the SRS resource in the antenna switching mode, and enables the ROHC algorithm, that is, performs S208c.

Still referring to FIG. 4A and FIG. 4B, for example, after RRC reconfiguration is completed according to the RRC reconfiguration message 3, the UE performs S208d. That is, RRC Reconfiguration Complete is sent to the Cell B to notify the Cell B that RRC reconfiguration for the RRC reconfiguration message 3 is completed.

Still referring to FIG. 4A and FIG. 4B, for example, in some implementations, the Cell B may further deliver an RRC reconfiguration message that carries a measurement configuration to the UE.

For example, in some other implementations, the measurement configuration that indicates the UE to perform a measurement reporting operation may alternatively be directly carried in the RRC reconfiguration message 3.

For processing of the RRC reconfiguration message by the UE, refer to S102a to S102c. Details are not described herein.

For ease of description, in this embodiment, a verification success is still used as an example, that is, the UE performs a measurement reporting operation according to the measurement configuration, that is, performs S209.

S209: In a process in which the UE moves from the Cell B to the Cell C, when the signal of the Cell B gradually weakens and a signal of the Cell C gradually strengthens, the UE generates an A3 measurement report (A3 MR).

S210: The UE sends the A3 MR to the Cell B.

S211: The Cell B sends, to the UE, an RRC reconfiguration message 4 indicating the UE to be handed over to the Cell C.

In this embodiment, the configuration of the SRS resource in the antenna switching mode is not removed or removed in the RRC reconfiguration message 4 is still used as an example.

S212: The UE verifies the RRC reconfiguration message 4.

It may be understood that when delivering the RRC reconfiguration message 4 to the UE, the Cell B has exchanged data with the Cell C according to the A3 MR reported by the UE in S210. It is assumed that the Cell C also enables the ROHC algorithm. Therefore, the RRC reconfiguration message 4 does not need to carry a configuration of disabling the ROHC algorithm. Therefore, the UE does not disable the ROHC algorithm.

In addition, for processing logic of a verification process in S212, refer to S112 in the foregoing embodiment. Details are not described herein again.

S213: Execute an RLF procedure and select a new cell (Cell A) for camping.

For specific operations involved in RLF, refer to the existing standard protocol.

Still referring to FIG. 4A and FIG. 4B, for example, if the UE chooses to camp on a new cell (Cell A) after the RLF procedure is performed, the UE sends, to the Cell A, an RRC Connection re-establishment Request that carries a Reconfiguration failure, so that the Cell A and the UE can perform an RRC connection re-establishment procedure, that is, perform S214.

S214: An RRC connection re-establishment procedure for camping on a new cell.

Specifically, because the Cell A is a new cell, the Cell A may send an RRC reconfiguration message 5 to the UE. After successfully verifying the RRC reconfiguration message 5, the UE may send RRC Reconfiguration Complete to the Cell A, to notify the Cell A that RRC reconfiguration for the RRC reconfiguration message 5 is completed. Therefore, an RRC connection between the UE and the Cell A is established.

Still referring to FIG. 4A and FIG. 4B, for example, in S208c, after the UE successfully verifies the RRC reconfiguration message 3, the UE enables the ROHC algorithm according to the configuration of enabling the ROHC algorithm carried in the RRC reconfiguration message 3. However, before camping on the Cell A, the RRC reconfiguration message of the configuration of disabling the ROHC algorithm that is delivered by the Cell B is not received. Therefore, after camping on the Cell A, the UE still enables the ROHC algorithm.

Based on this, if the Cell A does not enable the ROHC algorithm, after the RRC connection between the UE and the Cell A is established, the UE continues to compress and decompress a data packet based on the ROHC algorithm, that is, performs S215. However, the Cell A compresses and decompresses the data packet by using a non-ROHC algorithm, that is, performs S216.

S215: Compress and decompress the data packet based on the ROHC algorithm.

That is, the UE compresses, based on the ROHC algorithm, an uplink RTP sent to the Cell A, and decompresses, based on the ROHC algorithm, a downlink RTP packet received from the Cell A.

S216: The base station corresponding to the Cell A does not enable the ROHC algorithm, and uses a non-ROHC algorithm to compress and decompress the data packet.

That is, the Cell A compresses, by using a non-ROHC algorithm, an uplink RTP sent to the UE, and decompresses, by using a non-ROHC algorithm, a downlink RTP packet received from the UE.

S217: Uplink RTP packet/downlink RTP packet.

It may be understood that for the UE, the uplink RTP in S217 is an RTP packet sent by the UE to the Cell A, and the downlink RTP packet is an RTP packet sent by the Cell A to the UE. For the Cell A, the uplink RTP packet in S217 is an RTP packet sent by the Cell A to the UE, and the downlink RTP packet is an RTP packet sent by the UE to the Cell A.

S218: Decompression fails and discard.

It may be understood that after receiving the RTP packet sent by the Cell A, the UE decompresses the received RTP packet based on the ROHC algorithm, but the Cell A compresses, not by using the ROHC algorithm, the RTP to be sent to the UE. Therefore, the UE cannot decompress the RTP packet sent by the Cell A, that is, decompression fails. The UE directly discards an RTP packet for which decompression fails.

S219: Decompression fails and discard.

It may be understood that, after receiving the RTP packet sent by the UE, the Cell A decompresses the received RTP packet not based on the ROHC algorithm, but the UE compresses, by using the ROHC algorithm, the RTP to be sent to the Cell A. Therefore, the Cell A cannot decompress the RTP packet sent by the UE, that is, decompression fails. The Cell A also directly discards an RTP packet for which decompression fails.

In this way, the UE and the Cell A always do not receive an RTP packet that is sent by the other party and related to a current call. Based on the provisions of the existing standard protocol, when the UE does not receive an RTP packet related to the current call within a specific time period, the UE determines that an RTP or RTCP (Real-timeTransport Control Protocol, real-time transport control protocol) resource timeout exists in the current call. In this case, the UE sends a BYE message to the Cell A. In addition, a reason field in the BYE message carries the RTP/RTPC resource timeout (RTP/RTCP timeout Resource), and a corresponding error code is 2, that is, S220.

S220: BYE message (reason field: cause=2; text="RTP/RTCP timeout Resource").

Because the UE sends the BYE message for releasing the current call, the call between the UE and the Cell A is to be disconnected. A reason that the UE and the Cell A cannot receive the RTP packet sent by the other party is not that the UE and the Cell A do not deliver the RTP packet within a specified time, but is that the configuration of the UE does not match the configuration of the Cell A. For example, the ROHC algorithm is enabled for one of them, but the ROHC algorithm is not enabled for the other of them.

It should be understood that the foregoing description is merely an example provided to better understand the technical solution of this embodiment, and is not used as a unique limitation on this embodiment.

It may be learned from the foregoing descriptions of the scenarios in FIG. 3A to FIG. 4B that the UE is triggered to execute the RLF procedure, and a call drop problem occurring after a cell is reselected for camping is because the UE fails to verify the RRC reconfiguration message sent by the network side. For example, in a scenario, in a process of verifying the RRC reconfiguration message, because the RRC reconfiguration message indicates the UE to be handed over to the specified cell C, and the RRC reconfiguration message does not carry a configuration item of a parameter of the cell C (for example, does not carry information used to remove the configuration of the SRS resource in the antenna switching mode), but the configuration of the SRS resource in the antenna switching mode incompatible with the cell C exists in the UE, this causes a verification failure of the RRC reconfiguration message. In view of this, some embodiments of this application provide a method for a call, which aims to enable a terminal device to update an abnormal configuration item (an abnormal parameter in the configuration item exists, for example, a current corresponding value is incompatible with or does not match a to-be-camped-on cell) when a network side does not completely control configurations of some parameters according to an existing standard protocol, so that an RRC reconfiguration message used to indicate the UE to be handed over to a specified cell is successfully verified, and then the UE can be smoothly handed over from an original cell to the specified cell, thereby reducing a problem of a handover failure. Therefore, in a process in which a call is performed, no problem occurs in the call even if the UE is handed over to another cell, reducing a call fault and improving user experience. Alternatively, in another scenario, in a process of verifying the RRC reconfiguration message, because the RRC reconfiguration message carries a configuration item corresponding to the current cell B (the configuration item may also be referred to as a configuration of a parameter), but the configuration item carried in the RRC reconfiguration message is incompatible with or does not match a corresponding configuration item that is corresponding to the current cell B and that is previously stored in the UE (which may be understood as that a value of a parameter that is corresponding to the current cell B and that is carried in the RRC reconfiguration message is incompatible with or does not match a value of the parameter that is corresponding to the current cell B and that is previously stored in the UE), a subsequent error or failure is caused, and further a call abnormality occurs. In this scenario, some embodiments of this application provide a method for a call, which aims to enable a terminal device to update an abnormal configuration item when a network side does not completely control configurations of some parameters according to an existing standard protocol, so that an RRC reconfiguration message is successfully verified, and further, the call can continue smoothly.

Specifically, in the method for a call provided in some embodiments of this application, a manner of updating an abnormal configuration item is introduced, and a manner of updating some configuration items in an RRC reconfiguration message, that is, when the UE verifies an RRC reconfiguration that is delivered by a currently accessed base station and carries a configuration for handing over to a target base station, it is detected whether the UE has enabled a function that allows updating an incompatible configuration item (hereafter referred to as a compatibility function). Further, when it is determined that the function is enabled, and a configuration item that exists in the RRC reconfiguration message and that does not match/is incompatible with the target base station (also referred to as an abnormal configuration item in this specification) is a configuration item in a preset configuration item list, the abnormal configuration item is updated, for example, a configuration that has the abnormal configuration item is invalidated (hereinafter referred to as manner 1; in manner 1, a value corresponding to the abnormal configuration item may be changed from "1" (which may indicate that the configuration corresponding to the configuration item exists) to "0" (which may indicate that the configuration corresponding to the configuration item is removed); in this way, the configuration of the abnormal configuration item may be invalidated (which may also be understood as removing the configuration corresponding to the abnormal configuration item), to achieve an effect of ignoring the abnormal configuration item. Invalidating the configuration of the abnormal configuration item may be understood as ignoring the abnormal configuration item.) Alternatively, content configured for the abnormal configuration item in the UE is updated to content configured for the configuration item in the RRC reconfiguration message (hereinafter referred to as manner 2), so that the RRC reconfiguration message is successfully verified, thereby implementing handover from the current base station to the target base station.

It should be noted that the configuration item in the preset configuration item list in this application is specifically a configuration item that is allowed to be updated according to the foregoing manner 1 or manner 2 and that is determined based on an existing standard protocol and an attribute of a target base station actually to be handed over to, and after the configuration item in the preset configuration item list is updated, RRC reconfiguration is not affected.

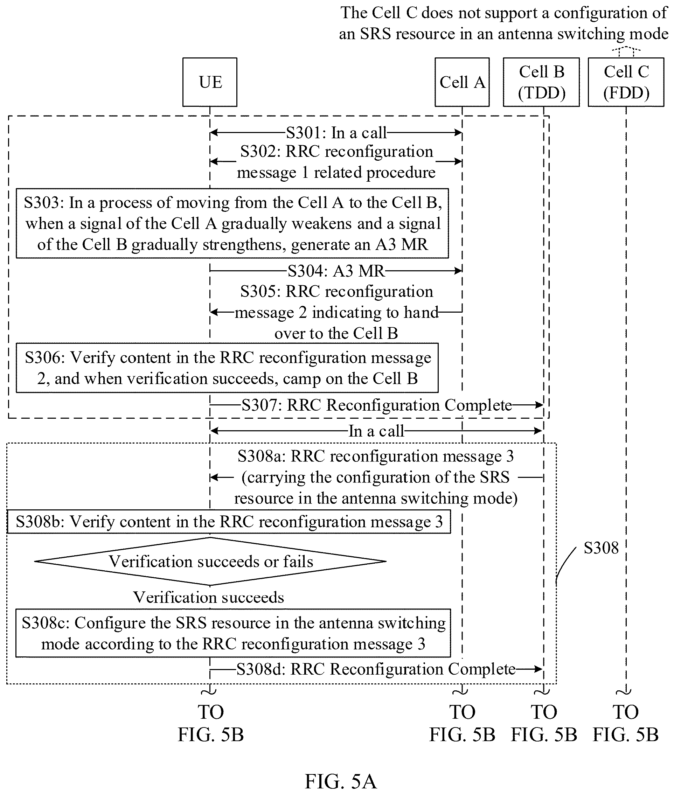

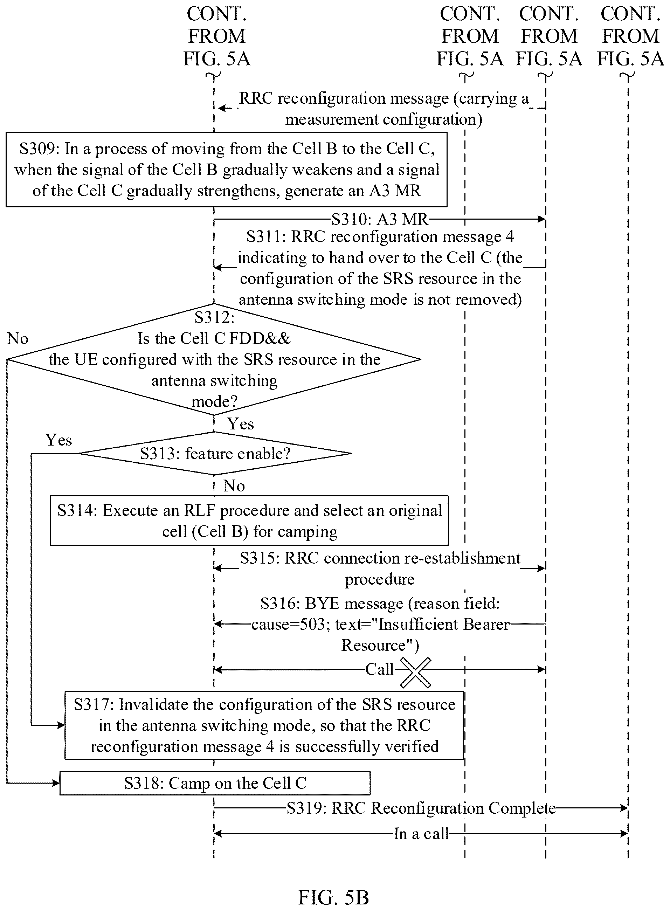

To better understand the method for a call provided in this application, based on the scenarios shown in FIG. 3A to FIG. 4B, a method for a call provided in an embodiment of this application is introduced, and a specific implementation scenario is described with reference to FIG. 5A and FIG. 5B.

Before the method for a call provided in this embodiment of this application is described, some descriptions in the following embodiments are first described.

Specifically, in each embodiment of this application, a preset configuration item list is the foregoing parameter configuration list pre-stored in the terminal device.

Correspondingly, an updatable configuration item is the foregoing ignorable parameter.

In addition, in each embodiment of this application, an abnormal configuration item is the foregoing configuration item whose parameter is corresponding to an abnormal value. For example, when a value corresponding to a first parameter is abnormal, a first configuration item including the first parameter is an abnormal configuration item.

Based on this premise, in the following embodiments and the accompanying drawings corresponding to the embodiments, determining whether an abnormal configuration item is a configuration item in a preset configuration item list (such as S404) essentially is: when the value corresponding to the first parameter is abnormal, determining whether the first parameter is the same as any parameter in a parameter list stored in the terminal device. A parameter value corresponding to each parameter included in the parameter list may be updated. Therefore, when it is determined that the first parameter is the same as any parameter in the parameter list stored in the terminal device, the first parameter may be determined as an ignorable parameter. That is, the abnormal configuration item in the following embodiments is an updatable configuration item.

Correspondingly, when the configuration item includes a parameter and a corresponding parameter value, updating the configuration item is essentially updating a value corresponding to the parameter in the configuration item.

Referring to FIG. 5A and FIG. 5B, implementations of S301 to S311 are similar to implementations of S201 to S211 in the embodiment shown in FIG. 4A and FIG. 4B. For specific implementation details, refer to descriptions of S201 to S211. Details are not described herein again. S312 to S319 are processing logic performed by the UE and the network side after the method for a call provided in this application is introduced.

Still referring to FIG. 5A and FIG. 5B, for example, after receiving the RRC reconfiguration message 4 delivered by the Cell B, the UE detects, when verifying the RRC reconfiguration message 4, whether the Cell C that needs to be handed over to is an FDD system, and whether the UE configures the antenna switching mode based on the RRC reconfiguration message previously received from the network side.

It may be learned from the description in the foregoing embodiment that when the target base station to be handed over to is an FDD system, that is, the configuration of the SRS resource in the antenna switching mode is not supported, but the SRS resource in the antenna switching mode is configured for the UE, the UE makes a verification failure result of the RRC reconfiguration message. Therefore, after the method for a call provided in this application is introduced, the UE needs to determine, by performing S312, a situation about whether the Cell C that the UE is currently located is an FDD system, and the UE is configured with the SRS resource in the antenna switching mode.

Correspondingly, when determining that the UE is in the foregoing case, based on the user method for a call provided in this application, the UE further detects whether a compatibility function is enabled, that is, performs S313.

It can be learned from previsions of the existing standard protocol that for an FDD system, the configuration of the SRS resource in the antenna switching mode is not supported. Therefore, when the target base station to be handed over to is an FDD system, the UE may not verify the configuration of the SRS resource in the antenna switching mode, and when other configurations are compatible, the RRC reconfiguration message 4 is successfully verified.

For example, in some implementations, the configuration of the SRS resource in the antenna switching mode may be agreed upon. For example, srs_tx_switch=1 indicates that the SRS resource in the antenna switching mode is configured. When the compatibility function is enabled, in S317, the UE may locally configure the SRS resource in the antenna switching mode. As described above, "1" is changed to "0", that is, srs_tx_switch=1 is changed to srs_tx_switch=0.

That the compatibility function is enabled may be understood as that a function of updating an abnormal configuration item is enabled, which may be that the UE enables the function by default, or the user enables the function on the UE.

Still referring to FIG. 5B, for example, after S317 is completed, because the RRC reconfiguration message 4 does not meet the configuration item of the Cell C of the FDD system in the existing standard protocol, for example, the configuration of the SRS resource in the antenna switching mode is updated to srs_tx_switch=0 in the UE, that is, the UE has removed the SRS resource in the antenna switching mode, a verification result of the RRC reconfiguration message 4 by the UE is a verification success. In this way, the UE may be handed over to the Cell C according to address information corresponding to the Cell C in the RRC reconfiguration message 4. Before receiving a next instruction for cell handover, the UE camps on the Cell C, that is, performs S318.

It may be learned from the foregoing description that, after completing RRC reconfiguration, the UE sends RRC Reconfiguration Complete to the network side, so as to notify the network side that the UE has completed RRC reconfiguration. Based on this, after the UE camps on the Cell C, the UE further sends RRC Reconfiguration Complete to the Cell C to notify the Cell C that RRC reconfiguration (handed over to the Cell C) for the RRC reconfiguration message 4 is completed, that is, performs S319.

For example, after the UE camps on the Cell C, in a case in which the call is not hung up, a current media session continues in the Cell C, that is, the call is performed between the UE and the Cell C.

For example, if it is determined in S313 that the UE does not enable the compatibility function, in this case, the UE may be set to execute an existing cell reselection procedure according to the provisions of the existing standard protocol.

Still referring to FIG. 5B, for example, in this embodiment, a scenario in which the UE selects an original cell for camping when the UE does not enable the compatibility function is used as an example. Implementations of S314 to S316 involved in camping on the original cell are similar to implementations of S113 to S115 in the embodiment shown in FIG. 3B. For specific implementation details, refer to descriptions of S113 to S115. Details are not described herein again.

For example, in some other implementations, for example, in a scenario in which the UE selects a new cell such as the Cell A for camping when the UE does not enable the compatibility function, for processing involved when the UE camps on the new cell, refer to descriptions of S213 to S220 in the embodiment shown in FIG. 4B. Details are not described herein again.

It should be understood that the foregoing description is merely an example provided to better understand the technical solution of this embodiment, and is not used as a unique limitation on this embodiment.

In addition, it should be noted that, for enabling of the compatibility function (a name of the function may also be another name), in some implementations, before the UE is delivered from a factory, a terminal manufacturer uniformly enables, according to a customized requirement, compatibility function switches of UEs placed into a specific region or a specific type of UEs. In this way, for the region or the type of UEs, an abnormal configuration item may be updated according to the user method for a call provided in this embodiment of this application, so that an RRC reconfiguration message is verified successfully, so as to ensure that no abnormality occurs in a call. For example, according to the foregoing manner 1, the UE updates the configuration item of the configuration of the SRS resource in the antenna switching mode, so that the UE can be successfully handed over from a cell of a TDD system to a cell of an FDD system, thereby reducing a handover failure problem and ensuring that the call is not hung up.

For example, in some other implementations, it may alternatively be set that the compatibility function is enabled by default for all UEs generated by a terminal manufacturer. In this implementation, in a case in which it is determined that the Cell C is an FDD system, and the UE is configured with the antenna switching mode, S313 to S316 may be directly skipped to perform S317.

For example, in some other implementations, an entry that can be operated by the user may be alternatively provided in the UE, and the user determines, according to a requirement, whether to enable the compatibility function.

It should be understood that the foregoing description is merely an example provided to better understand the technical solution of this embodiment, and is not used as a unique limitation on this embodiment.

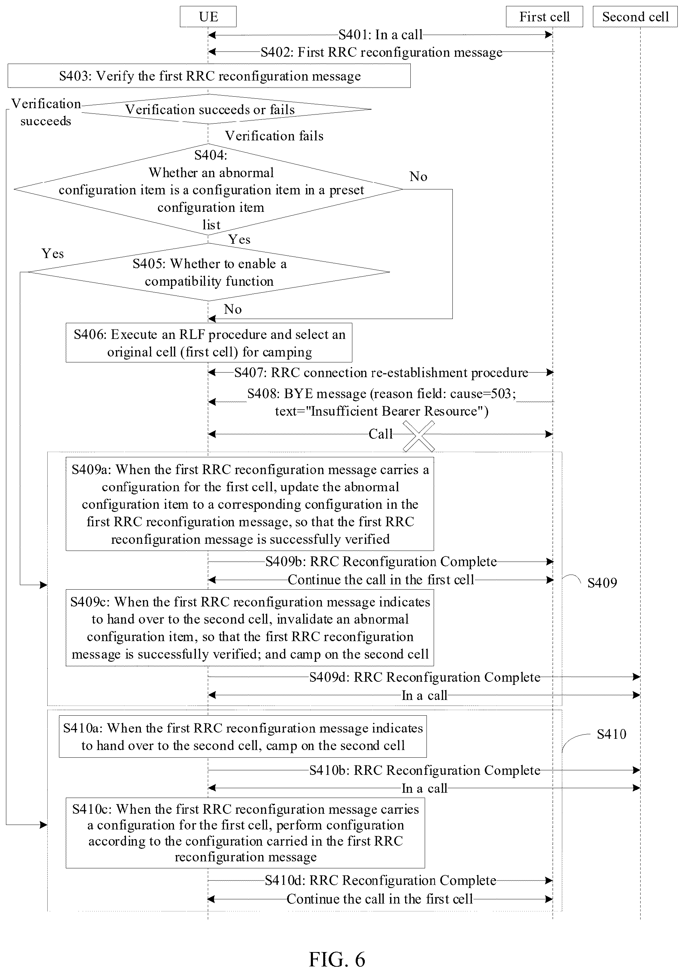

Because the embodiment in FIG. 5A and FIG. 5B is mainly for a scenario of the problem caused by the configuration of the SRS resource in the antenna switching mode, an abnormal configuration item that can be updated is mainly for a configuration item of the SRS resource in the antenna switching mode. However, in an actual application scenario, in a scenario in which the configuration of the SRS resource in the antenna switching mode is not involved, a cell handover failure problem is still caused because a configuration item is incompatible. In view of this, an embodiment of this application proposes another method for a call. Configuration items that can be updated by the UE in different scenarios are pre-determined according to an existing standard protocol (the configuration items that can be updated by the UE may also be understood as configuration items that can be corrected by the UE), and these configuration items that can be updated by the UE may be pre-configured in the UE, for example, the foregoing preset configuration item list may be configured in the UE. In this way, when verifying content in an RRC reconfiguration message from the network side, the UE directly determines, according to a preset updatable configuration item, whether a configuration item that causes a verification failure can be updated according to the foregoing manner 1 or manner 2, and further, when configuration items that cause an abnormality can be updated, these abnormal configuration items are updated according to the foregoing manner 1 or manner 2 (which may also be understood as correcting these abnormal configuration items), so that the UE can be normally handed over to a target cell without being affected by these abnormal configuration items. The following specifically describes this implementation with reference to FIG. 6.

Referring to FIG. 6, for example, when a UE performs a call in a first cell (S401), if a first RRC reconfiguration message delivered by the first cell is received (S402), the UE verifies the first RRC reconfiguration message (S403).

For a procedure of establishing a media session between the UE and the first cell, refer to S101 in the foregoing embodiment. Details are not described herein again.

For example, the first cell may be the Cell A, the Cell B, or the Cell C in the foregoing embodiments. For ease of understanding, in this embodiment, for example, the first cell is the Cell B.

When the first cell is the Cell B, the first RRC reconfiguration message may be, for example, the RRC reconfiguration message 3 or the RRC reconfiguration message 4 that is sent by the Cell B to the UE in the foregoing embodiments.

For verification logic of the UE for the first RRC reconfiguration message, refer to S108b, or S112, or S208b, or S212, or S308b, or the like in the foregoing embodiments. Details are not described herein again.

Still referring to FIG. 6, for example, if it is determined through verification that no abnormal configuration item (or an incompatible configuration item) exists in the first RRC reconfiguration message, it may be considered that verification for the RRC reconfiguration message 4 succeeds. In this case, the UE may perform S410. On the contrary, if an abnormal configuration item exists, it may be considered that verification for the RRC reconfiguration message 4 fails. In this case, the UE may perform S405.

It should be noted that a configuration carried in the first RRC reconfiguration message may be for the first cell, or may be used to indicate to hand over to a second cell (the Cell C is used as an example). Therefore, in S410, the UE may perform a specific operation on a cell targeted by the first RRC reconfiguration message.

Still referring to FIG. 6, for example, when the first RRC reconfiguration message indicates to hand over to the second cell, an operation to be performed by the UE is to camp on to the second cell according to the first RRC reconfiguration message, that is, perform S410a. Correspondingly, after the UE camps on the second cell, the UE sends RRC Reconfiguration Complete to the second cell, that is, performs S410b. A current call performed by the UE continues in the second cell.

Still referring to FIG. 6, for example, when the first RRC reconfiguration message carries a configuration for the first cell (for example, the RRC reconfiguration message 3 in the foregoing embodiment), an operation to be performed by the UE is to perform configuration according to the configuration carried in the first RRC reconfiguration message, that is, perform S410c. In this case, after the UE performs configuration according to the first RRC reconfiguration information, the UE still camps on the first cell. Therefore, the UE sends RRC Reconfiguration Complete to the first cell, that is, performs S410d. The current call performed by the UE continues in the first cell.

Still referring to FIG. 6, for example, after verification for the first RRC reconfiguration message fails, the UE may perform S404 to determine whether an abnormal configuration item is a configuration item (an updatable configuration item) in the preset configuration item list.

For example, if (all) abnormal configuration items are preset updatable configuration items, the UE may further detect whether the compatibility function is enabled, that is, perform S405. Correspondingly, if the compatibility function is enabled, S409 may be performed. On the contrary, if the compatibility function is not enabled, in this case, the UE may be set to execute an existing RLF procedure to reselect a cell for camping according to provisions of an existing standard protocol. In this embodiment, camping on an original cell is used as an example, that is, in a case in which the compatibility function is not enabled, the UE performs S406 to S408. For a specific implementation procedure of S406 to S408, refer to S113 to S115 in the foregoing embodiment, or S314 to S316. Details are not described herein again.

In an actual application, in a case in which the compatibility function is not enabled, the UE may alternatively camp on a new cell, that is, the UE performs steps S213 to S220 in the foregoing embodiment, and details are not described herein again.

It should be noted that a configuration carried in the first RRC reconfiguration message may be for the first cell, or may be used to indicate to hand over to a second cell (the Cell C is used as an example). Therefore, in S409, the UE may perform different operations for different cells according to the first RRC reconfiguration message. Details are described below.

Still referring to FIG. 6, for example, when the first RRC reconfiguration message carries the configuration for the first cell (for example, the RRC reconfiguration message 3 in the foregoing embodiment), the UE may update, according to the foregoing manner 1, an abnormal configuration item to a configuration corresponding to the first RRC reconfiguration message, that is, perform S409a. Specifically, for example, the first RRC reconfiguration message carries a second configuration item about the first cell (or the second configuration item may be understood as a first configuration item corresponding to the first configuration item stored in the UE, and the two have a same name but correspond to different values). Before receiving the first RRC reconfiguration message, the terminal device stores the first configuration item, where the first configuration item and the second configuration item are for a same parameter but have different parameter values, and the UE finds, in a process of verifying the first RRC reconfiguration message, that the first configuration item is abnormal (which may be understood as that a configuration corresponding to the parameter is abnormal). In this case, after updating a value of the first configuration item according to the first RRC reconfiguration message, the UE still camps on the first cell. Therefore, the UE sends an RRC Reconfiguration complete message to the first cell, that is, performs S409b. The current call performed by the UE continues in the first cell.

For example, in a scenario in which an abnormal configuration item is updated in manner 2, for example, when the UE is handed over from the Cell A to the Cell B, the UE is configured according to a configuration that is about the Cell B and that is sent by the Cell A. After the UE camps on the Cell B, the Cell B modifies these configured configurations and sends the configured configurations to the UE in the first RRC reconfiguration message. This causes a problem that some configuration items configured for the Cell B in the UE are incompatible with the configurations carried in the first RRC reconfiguration message. In this case, the UE essentially needs to perform an operation according to a configuration in a last received RRC reconfiguration message. Therefore, an abnormal configuration item needs to be updated to the configuration in the last received RRC reconfiguration message.

It should be understood that the foregoing description is merely an example provided to better understand the technical solution of this embodiment, and is not used as a unique limitation on this embodiment.

Still referring to FIG. 6, for example, when the first RRC reconfiguration message indicates to hand over to the second cell, an operation to be performed by the UE is to invalidate an abnormal configuration item. For example, the abnormal configuration item is updated in the foregoing manner 1, so that the first RRC reconfiguration message is successfully verified, and the UE camps on the second cell according to the first RRC reconfiguration message, that is, performs S409c. Correspondingly, after the UE camps on the second cell, the UE sends RRC Reconfiguration Complete to the second cell, that is, performs S409d. A current call performed by the UE continues in the second cell.

For example, the abnormal configuration item is the foregoing configuration item of the SRS resource in the antenna switching mode. In S409c, the UE may update the configuration item srs_tx_switch=1 of the SRS resource in the antenna switching mode to srs_tx_switch=0. In this way, the configuration of the SRS resource in the antenna switching mode is not validated (or may be understood as that the configuration of the SRS resource in the antenna switching mode is removed), so that the UE can successfully verify the first RRC reconfiguration message. This may be understood as that when srs_tx_switch=1, if the UE initially verifies that the check item is abnormal (that is, the configuration item does not match the Cell C) when verifying the first RRC reconfiguration message, the UE may modify a value of the configuration item to make the configuration item invalidated, so that the first RRC reconfiguration message can finally be successfully verified by the UE.

It should be understood that the foregoing description is merely an example provided to better understand the technical solution of this embodiment, and is not used as a unique limitation on this embodiment.

In addition, it should be further noted that, based on the method for a call provided in this application, an operation of determining whether an abnormal configuration item is a preset updatable configuration item, and an operation of detecting whether a compatibility function is enabled when it is determined that all abnormal configuration entries are updatable configuration entries may occur when the UE receives any RRC reconfiguration message. The foregoing description is merely an example enumerated for better understanding the technical solutions in this embodiment, and is not used as a unique limitation on this embodiment.

In addition, it should be further understood that, in the foregoing descriptions of the method for a call provided in the embodiments of this application, only a 5G network is used as an example, and the method is also applicable to a 4G network. In addition, with development of communication technologies, in future next-generation communication technologies, for example, 6G, if these networks can implement RRC reconfiguration based on an existing standard protocol, the method for a call provided in the embodiments of this application is also applicable thereto.

In addition, it should be further understood that, to implement the foregoing functions, the terminal device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

To better understand the technical solutions provided in the embodiments of this application, that the terminal device is a mobile phone is used as an example. Based on a relationship between a software structure and hardware of the mobile phone, a function module and hardware involved in implementing the method for a call provided in the embodiments of this application are described, and interaction between the function module and the hardware is described.

Before the software structure of the mobile phone is described, an architecture that may be used in a software system of the mobile phone is first described.

Specifically, in an actual application, the software system of the mobile phone may use a layered architecture, an event-driven architecture, a microkernel architecture, a microservice architecture, or a cloud architecture.

In addition, it may be understood that a software system currently used by a mainstream terminal device includes but is not limited to a Windows system, an Android system, and an iOS system. For ease of description, in this embodiment of this application, an Android system with a layered architecture is used as an example to describe the software structure of the mobile phone. The subsequent technical solutions for a call provided in the embodiments of this application are also applicable to another system in specific implementation.

In addition, it should be understood that a current layered architecture of the mobile phone divides software into several layers, and each layer has a clear role and task. Layers communicate with each other through a software interface. These layers may include, for example, an application layer, an application framework layer, an Android runtime (Android runtime) and a system library, a hardware abstraction layer, and a kernel layer. The following uses only a layer at which a function module related to the method for a call provided in the embodiments of this application is located as an example for description.

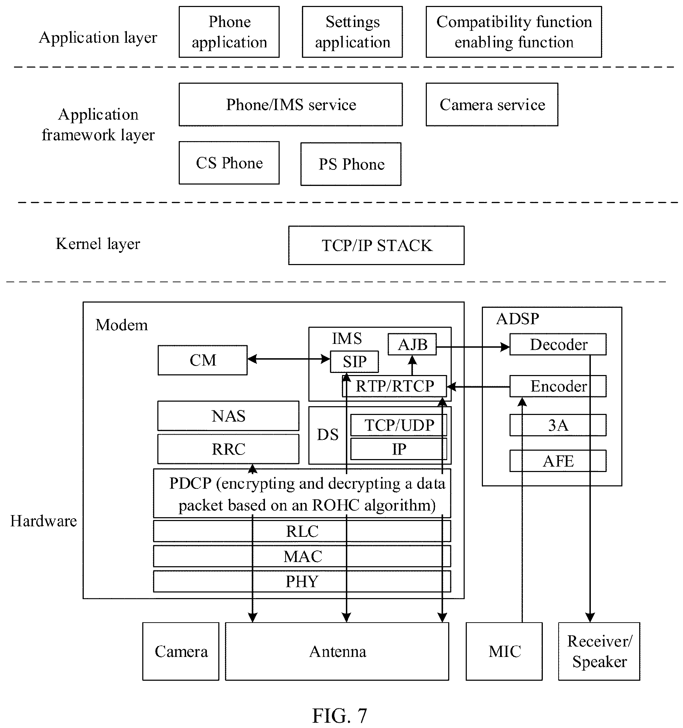

FIG. 7 is a schematic diagram of a software structure of a mobile phone and involved hardware according to an embodiment of this application. In FIG. 7, an application layer, an application framework layer, a kernel layer, and hardware exist respectively from top to bottom.

The application layer may include a series of application packages. The application framework layer provides an application programming interface (application programming interface, API) and a programming framework for an application at the application layer. In some implementations, these programming interfaces and programming frameworks may be described as functions.

Still referring to FIG. 7, specifically, in the technical solution provided in this embodiment of this application, the application layer may include a phone application, a settings application, a compatibility function enabling application, and the like.

The phone application may be used by a user to initiate a call service operation.

Correspondingly, in response to the operation behavior, the mobile phone may establish a media session with a called party based on the mobile communication architecture shown in FIG. 1. For establishment of the media session, references may be made to the foregoing terminal A and terminal B. For a description part of establishing the media session based on the mobile communication architecture shown in FIG. 1, details are not described herein again.

The compatibility function enabling application may provide an entry for enabling a compatibility function.

For example, when the compatibility function described in the foregoing embodiment may be enabled by the user, the user may enable the compatibility function by using the entry provided by the compatibility function enabling application and specially used to enable the compatibility function, so that when the configuration items that can be updated in the foregoing embodiment appear, the mobile phone can update these configuration items by using the user method for a call provided in the embodiments of this application, thereby completing RRC reconfiguration, that is, can be handed over from a currently accessed 5G base station to a target base station.

The settings application may also provide an entry for enabling the compatibility function.

For example, in a case in which the compatibility function in the foregoing embodiment may be enabled by the user, the entry for enabling the compatibility function may be integrated into the settings application. In this way, the user does not need to separately install the compatibility function enabling application on the mobile phone, and the compatibility function can be enabled by using the entry provided by the settings application.

It should be understood that the foregoing description is merely an example provided to better understand the technical solution of this embodiment, and is not used as a unique limitation on this embodiment.

Still referring to FIG. 7, specifically, in the technical solution provided in this embodiment of this application, the application framework layer may include a phone/IMS service, a camera service, a CS Phone, a PS Phone, and the like.

The phone/IMS service is used to invoke a SIP module in a modem to make various SIP request messages, such as INVITE, ACK, and 200 OK, when a media session is established and after the media session is established, that is, during a call.

The camera service is used to: when the user initiates a video call, invoke a component and a function module related to a camera, for example, invoke a camera driver, so that the camera driver drives the camera to work, invoke a function module that processes a video stream collected by the camera, and so on.

The CS Phone is used for a call of a CS (Circuit Switched, circuit switched) network. When the IMS service is unavailable (the mobile phone camps on 2G/3G or an IMS fails to register), a CS call may be used for a call or may be used for a switched domain redial (usually referred to as a CS recall) when an IMS call fails.

The PS Phone is used for a call of a PS (Packet Switched, packet switched) network. When the IMS service is available, an IMS call (VOLTE, VONR) may be performed by using a PS domain.

It should be understood that the foregoing description is merely an example provided to better understand the technical solution of this embodiment, and is not used as a unique limitation on this embodiment.

In addition, it may be understood that, the kernel layer in the Android system is a layer between hardware and software. Still referring to FIG. 7, specifically, in the technical solution provided in this embodiment of this application, the kernel layer may include a Transmission Control Protocol/Internet Protocol STACK (Transmission Control Protocol/Internet Protocol STACK, TCP/IP protocol stack).

TCP/IP refers to a protocol suite that can implement information transmission between a plurality of different networks. Specifically, in an actual application, the TCP/IP STACK at the kernel layer mainly serves an Internet access service, and also provides a service for video-related data processing during a call service.

Still referring to FIG. 7, specifically, in the technical solution provided in this embodiment of this application, the involved hardware may include a modem (Modem), an ADSP (digital signal processor), a camera, an antenna, a MIC (microphone), a receiver, a speaker, and the like.

The antenna is configured to receive content sent by a network side, such as the RRC connection configuration message descried in the foregoing embodiment, a SIP request message, and an SRS that needs to be sent in turn.

The camera is configured to: when an initiated call service is a video call, collect a video stream.

The MIC is configured to collect audio data of the user during a call, and transmit the collected audio data to the ADSP.

After an AFE (Audio Front-End, audio front-end) module, a 3A module, and an encoder in the ADSP successively process the audio data collected by the MIC, an RTP/RTCP module in the Modem processes the audio data, and then the audio data is processed at a TCP/UDP layer and an IP layer. A PDCP layer encrypts the audio data by using an enabled algorithm, such as the ROHC algorithm described in the foregoing embodiment.

It should be noted that the 3A module specifically refers to a function module that integrates three audio algorithms: acoustic echo canceling (Acoustic Echo Cancelling, AEC), active noise control (Active Noise Control, ANS), and automatic gain control (Automatic Gain Control, AGC).

A PDCP-encrypted data packet is transmitted to the antenna after sequentially passing through an RLC layer, a MAC layer, and a PHY layer, and is finally sent to the network side by using the antenna.

Correspondingly, a data packet received by the antenna from the network side is transmitted to the PDCP layer for processing after sequentially passing through the PHY layer, the MAC layer, and the RLC layer. For example, the data packet is decrypted based on the ROHC algorithm, and then a decrypted RTP packet/RTCP packet is processed by the IP layer and the TCP/UDP layer, and is processed by the RTP/RTCP module and then transmitted to the ADSP. In the ADSP, data provided by the RTP/RTCP module is sequentially processed by a decoder, the 3A module, and the AFE module, and audio data that can be played is obtained through parsing. Finally, the audio data is sent to the receiver, the speaker, or a headset for playing.

In addition, it should be further noted that processing of various SIP signaling messages in this embodiment of this application is implemented by the SIP module in the Modem. Processing of various RRC messages, such as RRC Reconfiguration, RRC Reconfiguration Complete, and RRC Connection re-establishment, in this embodiment of this application is implemented by an RRC module in the Modem.

Introduction to the software structure of the mobile phone ends here. It may be understood that the layers in the software structure shown in FIG. 7 and components included in each layer do not constitute a specific limitation on the mobile phone. In some other embodiments of this application, the mobile phone may include more or fewer layers than those shown in the figure, and each layer may include more or fewer components. This is not limited in this application.

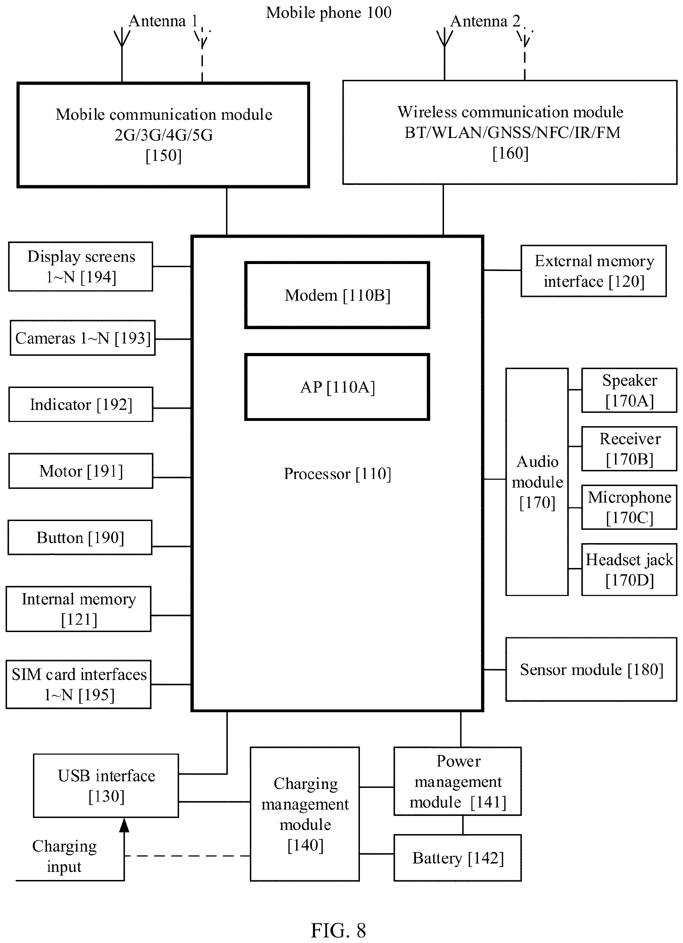

To better understand the technical solutions provided in the embodiments of this application, that the terminal device is a mobile phone is still used as an example. Referring to FIG. 8, a specific structure of the mobile phone and components involved in implementing the embodiments of this application are specifically described.

Referring to FIG. 8, a mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, and a subscriber identification module (subscriber identification module, SIM) card interface 195, and the like.

The antenna 1 and the antenna 2 are configured to transmit and receive electromagnetic wave signals. Each antenna in the mobile phone 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

Specifically, in each embodiment of this application, a message sent by a base station, such as the gNB in the foregoing embodiment, to a UE, namely, the mobile phone 100, for example, an RRC reconfiguration message corresponding to a current cell, an RRC connection configuration message corresponding to a cell required to be handed over to, and a SIP signaling message sent by the gNB to the UE in a multimedia session process may be implemented by using the antenna 1 or the antenna 2.

Correspondingly, a message sent by the mobile phone 100 to the gNB, such as RRC Reconfiguration Complete, RRC Connection Reestablishment, and a SIP signaling message sent by the UE to the gNB in the multimedia session process are also implemented by using the antenna 1 or the antenna 2.

The mobile communication module 150 may provide a solution for wireless communication that is applied to the mobile phone 100 and that includes 2G/3G/4G/5G and the like. The mobile communication module 150 may include at least one filter, switch, power amplifier, low noise amplifier (low noise amplifier, LNA), and the like. The wireless communication module 160 may provide a solution for wireless communication that is applied to the mobile phone 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like.

For example, in some implementations, it may be set that the antenna 1 of the mobile phone 100 is coupled to the mobile communication module 150, and the antenna 2 is coupled to the wireless communication module 160. Therefore, the mobile phone 100 may communicate with a network and another device by using a mobile communication technology or a wireless communication technology.

Still referring to FIG. 8, for example, the audio module 170 of the mobile phone 100 may include the speaker 170A, the receiver 170B, the microphone 170C, the headset jack 170D, and the like.

For example, the mobile phone 100 may implement an audio function, for example, music playing, recording, and the voice call service in the embodiments of this application, by using the speaker 170A, the receiver 170B, the microphone 170C, the headset jack 170D, an application processor, and the like in the audio module 170.

In addition, the sensor module 180 in the mobile phone 100 in some implementations may include a pressure sensor, a gyroscope sensor, an air pressure sensor, a magnetic sensor, an acceleration sensor, a distance sensor, a proximity light sensor, a fingerprint sensor, a temperature sensor, a touch sensor, an ambient light sensor, a bone conduction sensor, and the like, which are not listed herein and are not limited in this application.

In addition, it should be noted that the processor 110 may include one or more processing units in some implementations. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like.

It may be understood that, during specific implementation, different processing units may be separate devices or may be integrated into one or more processors.

It should be noted that specifically, in an actual application, the mobile phone 100 may implement, by using two processing units AP 110A and Modem 110B, the technical solutions provided in the embodiments of this application. For example, a call request initiated by the user is responded to by using the AP, and then a service related to a call service in the application framework layer shown in FIG. 7 and a corresponding driver in the kernel layer are invoked, to hand over the call request to the Modem. The Modem may interact with the network side according to the processing logic involved in the method for a call provided in the embodiments of this application. For specific implementation details, refer to the foregoing embodiments. Details are not described herein again.

In addition, it may be further understood that the processing unit, namely, the controller, included in the processor 110 may be a nerve center and a command center of the mobile phone 100. In an actual application, the controller may generate an operation control signal based on instruction operation code and a timing signal, to complete control of instruction fetching and instruction execution.

In addition, a memory in the processor 110 is mainly configured to store instructions and data. In some embodiments, the memory in the processor 110 is a cache.

In addition, the USB interface 130 shown in FIG. 8 is an interface that complies with the USB standard specification, and may be specifically a Mini USB interface, a Micro USB interface, a USB Type C interface, and the like.

The charging management module 140 is configured to receive a charging input from a charger. In addition, the power management module 141 shown in FIG. 8 is configured to be connected to the battery 142, the charging management module 140, and the processor 110. The power management module 141 receives an input from the battery 142 and/or the charging management module 140, and supplies power to the processor 110, the internal memory 121, the external memory, the display screen 194, the camera 193, the wireless communication module 160, and the like. A wireless communication function of the mobile phone 100 may be implemented by using the antenna 1, the antenna 2, the mobile communication module 150, the wireless communication module 160, the modem processor, the baseband processor, and the like.

In addition, the mobile phone 100 shown in FIG. 8 implements a display function through the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs, which execute program instructions to generate or change display information.

The display screen 194 is specifically configured to display an image, a video, and the like. The display screen 194 includes a display panel. In some embodiments, the mobile phone 100 may include 1 or N display screens 194, where N is a positive integer greater than 1.

The mobile phone 100 may implement a shooting function by using the ISP, the camera 193, the video codec, the GPU, the display screen 194, the application processor, and the like. The camera 193 is configured to capture a still image or a video. In some embodiments, the mobile phone 100 may include 1 or N cameras 193, where N is a positive integer greater than 1.

For example, if an initiated call service is a video call service, such as a video call or a video conference, in a process of implementing the call service, in addition to the audio module 170, the camera 193 needs to be involved.

In addition, the external memory interface 120 shown in FIG. 8 may be configured to connect to an external memory card such as a Micro SD card, to extend a storage capability of the mobile phone 100. The external memory card communicates with the processor 110 through the external memory interface 120, to implement a data storage function. For example, files such as music and videos are stored in the external memory card.

In addition, the internal memory 121 shown in FIG. 8 may be configured to store computer-executable program code. The executable program code includes instructions. The processor 110 runs the instructions stored in the internal memory 121, to perform various function applications and data processing of the mobile phone 100.

Specifically, the file that records the updatable configuration item in the foregoing embodiment may be preconfigured into the internal memory 121 in the mobile phone 100 when the mobile phone 100 is delivered from a factory.

In addition, the motor 191 shown in FIG. 8 may be, for example, a vibration motor; and the indicator 192 may be an indicator light.

In addition, the SIM card interface 195 shown in FIG. 8 may be configured to connect to a SIM card or a USIM card. The SIM card may be inserted into the SIM card interface 195 or removed from the SIM card interface 195, to come into contact with or be separated from the mobile phone 100. The mobile phone 100 may support 1 or N (N is an integer greater than 1) SIM card interfaces 195. That is, a plurality of SIM cards or USIM cards may be inserted into the terminal.

Introduction to the hardware structure of the mobile phone 100 ends here. It should be understood that the mobile phone 100 shown in FIG. 8 is merely an example. During specific implementation, the mobile phone 100 may have more or fewer components than those shown in the figure, may combine two or more components, or may have a different component configuration. The various components shown in FIG. 8 may be implemented in hardware that includes one or more signal processing and/or application-specific integrated circuits, software, or a combination of hardware and software.

In addition, it should be noted that, in an actual application scenario, the method for a call provided in the foregoing embodiments implemented by the terminal device may alternatively be performed by a chip system included in the terminal device. Based on this, an embodiment of this application further provides a chip system, and the chip system may include a processor. The chip system may be coupled to a memory, so that the processor in the chip system invokes, when running, a computer program stored in the memory, to implement the foregoing steps performed by the terminal device. The processor in the chip system may be an application processor (AP), or may be a non-application processor, such as a modem (Modem).

In addition, an embodiment of this application further provides a computer-readable storage medium. The computer storage medium stores computer instructions. When the computer instructions are run on a terminal device, the terminal device is enabled to perform the foregoing related method steps to implement the method for a call in the foregoing embodiments.

In addition, an embodiment of this application further provides a computer program product. When the computer program product is run on a terminal device, the terminal device is enabled to perform the foregoing related method steps to implement the method for a call in the foregoing embodiments.

In addition, it may be learned from the foregoing descriptions that, the terminal device, the computer-readable storage medium, the computer program product, or the chip provided in embodiments of this application may be configured to perform the corresponding method provided above. Therefore, for beneficial effects that can be achieved by the terminal device, the computer-readable storage medium, the computer program product, or the chip, refer to the beneficial effects in the corresponding method provided above. Details are not described herein again.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A method for a call, applied to a terminal device, wherein the method comprises:
in a process of performing a call in a first cell, receiving a first RRC reconfiguration message sent by a base station corresponding to the first cell, wherein before receiving the first RRC reconfiguration message, the terminal device stores a first configuration item, and the first configuration item comprises a first parameter and a first value corresponding to the first parameter;
verifying the first RRC reconfiguration message and the first configuration item, wherein the first RRC reconfiguration message comprises first information, and the verifying the first RRC reconfiguration message and the first configuration item comprises verifying the first information, the first parameter, and the first value corresponding to the first parameter; and
in a process of verifying the first RRC reconfiguration message and the first configuration item, ignoring an abnormal value corresponding to the first parameter when a value corresponding to the first parameter is abnormal, so that the first RRC reconfiguration message is successfully verified, wherein the value corresponding to the first parameter comprises the first value.

2. The method according to claim 1, wherein the ignoring an abnormal value corresponding to the first parameter comprises:
updating the value corresponding to the first parameter.

3. The method according to claim 1 or 2, wherein the value corresponding to the first parameter further comprises a second value, the first RRC reconfiguration message carries a second configuration item about the first cell, and the second configuration item comprises the first parameter and the second value corresponding to the first parameter; and
the ignoring an abnormal value corresponding to the first parameter when a value corresponding to the first parameter is abnormal comprises:
in a case that the first value is different from the second value, ignoring the first value corresponding to the first parameter.

4. The method according to claim 3, wherein the ignoring the first value corresponding to the first parameter comprises:
updating the first value corresponding to the first parameter to the second value.

5. The method according to claim 1 or 2, wherein the first information comprises information of a second cell, and the first RRC reconfiguration message is used to indicate the terminal device to be handed over from the first cell to the second cell; and
the ignoring an abnormal value corresponding to the first parameter when a value corresponding to the first parameter is abnormal comprises:
when the value corresponding to the first parameter is incompatible with the information of the second cell, ignoring the abnormal value corresponding to the first parameter.

6. The method according to claim 5, wherein the ignoring an abnormal value corresponding to the first parameter comprises:
updating the first value corresponding to the first parameter to a third value.

7. The method according to claim 5 or 6, wherein the first cell is a cell of a TDD system, and the second cell is a cell of an FDD system.

8. The method according to claim 7, wherein the first configuration item is a configuration item of an SRS resource in an antenna switching mode.

9. The method according to any one of claims 6 to 8, wherein the first value is 1, and the third value is 0.

10. The method according to any one of claims 1 to 9, wherein the ignoring an abnormal value corresponding to the first parameter comprises:
ignoring the abnormal value corresponding to the first parameter when the first parameter is an ignorable parameter;
wherein that the first parameter is an ignorable parameter comprises:
the first parameter is the same as any parameter in a parameter list stored in the terminal device, the parameter list comprises at least one parameter, and a parameter value respectively corresponding to the at least one parameter is ignorable.

11. The method according to claim 10, wherein the ignoring the abnormal value corresponding to the first parameter when the first parameter is an ignorable parameter comprises:
when the first parameter is an ignorable parameter, and the terminal device supports a compatibility function, ignoring the abnormal value corresponding to the first parameter, wherein that the terminal device supports a compatibility function indicates that the terminal device supports ignoring an abnormal value corresponding to an ignorable parameter.

12. The method according to any one of claims 1 to 11, wherein the first configuration item is a configuration received by the terminal device in a cell on which the terminal device camps before camping on the first cell.

13. A method for a call, applied to a terminal device, wherein the method comprises:
in a process of performing a call in a first cell, receiving a first RRC reconfiguration message sent by a base station corresponding to the first cell;
verifying the first RRC reconfiguration message; and
in a process of verifying the first RRC reconfiguration message, when a parameter whose parameter value is abnormal exists, ignoring an abnormal parameter value corresponding to the parameter, so that the first RRC reconfiguration message is successfully verified.

14. The method according to claim 13, wherein the ignoring an abnormal parameter value corresponding to the parameter comprises:
updating a parameter value corresponding to the parameter.

15. A terminal device, wherein the terminal device comprises a memory and a processor, the memory is coupled to the processor, the memory stores program instructions, and when the program instructions are executed by the processor, the terminal device is enabled to perform the method for a call according to any one of claims 1 to 14.

16. A chip system, wherein the chip system comprises a processor, and the processor is configured to support a terminal device in implementing the method for a call according to any one of claims 1 to 14.

17. The chip system according to claim 16, wherein the processor comprises a modem.

18. A computer-readable storage medium, comprising a computer program, wherein when the computer program runs on a terminal device, the terminal device is enabled to perform the method for a call according to any one of claims 1 to 14.
